# EUROPÄISCHE PATENTSCHRIFT

(11) **EP 3 958 157 B1**
(45) Veröffentlichungstag und Bekanntmachung des Hinweises auf die Patenterteilung: **16.10.2024**
(21) Anmeldenummer: 21192120.0
(22) Anmeldetag: 19.08.2021
(51) Int. Cl.: G06F 21/62

(54) **VERSCHLÜSSELTE SUCHE IN EINER DATENBANK**
ENCRYPTED SEARCH IN A DATABASE
RECHERCHE CHIFFRÉE DANS UNE BASE DE DONNÉES

(30) Priorität: 21.08.2020 DE 102020121984
(43) Veröffentlichungstag der Anmeldung: 23.02.2022
(73) Patentinhaber: Bundesdruckerei GmbH, 10969 Berlin (DE)
(72) Erfinder: WILKE, Dr. Andreas, 13509 Berlin (DE); KOMAROV, Ilya, 13507 Berlin (DE); PAESCHKE, Dr. Manfred, 16348 Wandlitz (DE)
(74) Vertreter: Richardt Patentanwälte PartG mbB

(56) Entgegenhaltungen:
- EP-A1- 3 364 316
- EP-A1- 3 388 969
- WO-A1-2018/104275
- BOUCENNA FATEH ET AL: "Secure Inverted Index Based Search over Encrypted Cloud Data with User Access Rights Management", JOURNAL OF COMPUTER SCIENCE AND TECHNOLOGY, SPRINGER SINGAPORE, SINGAPORE, vol. 34, no. 1, 18 January 2019 (2019-01-18), pages 133 - 154, XP036685920, ISSN: 1000-9000, [retrieved on 20190118], DOI: 10.1007/S11390-019-1903-2

## Beschreibung

Die Erfindung betrifft ein Verfahren für eine verschlüsselte Suche in einer Datenbank. Ferner betrifft die Erfindung einen Server sowie ein verteiltes System für eine solche verschlüsselten Suche in einer Datenbank.

Datenbanken umfassen typischer Weise große Mengen Daten. Ob eine Datenbank relevante Informationen bzw. Datenelemente umfasst, ist daher im Allgemeinen nicht von vorneherein absehbar, sondern ergibt meist erst im Zuge eines Zugriffs auf die Datenbank. Andererseits umfassen Datenbank oftmals sensible Daten, wie beispielsweise personenbezogene Daten, welche vor unberechtigten Zugriffen zu schützen sind. Ein Zugriff auf eine solche Datenbank sollte daher nicht gewährt werden, ohne dass sicher ist, dass dieser tatsächlich auf relevante Daten gerichtet ist bzw. relevante Daten bereitzustellen vermag. Somit ergibt sich ein Widerspruch bzw. ein Spannungsfeld zwischen der Notwendigkeit die Daten einer Datenbank zu schützen und andererseits der Notwendigkeit eines Zugriffs auf die Daten, um bestimmen zu können, ob ein Zugriff auf die geschützten Daten gerechtfertigt ist.

Die EP 3 388 969 A1 beschreibt ein Suchsystem, umfassend einen Suchserver und eine Speichervorrichtung mit einem Dateispeicher, der zum Speichern von Dokumenten konfiguriert ist, einen Indexspeicher, der zum Speichern von Indizes in Bezug auf die Dokumente konfiguriert ist, eine Dokumentenschlüsseldatenbank, die zum Speichern von Dokumentschlüsseln konfiguriert ist, welche den Dokumenten im Dateispeicher zugeordnet sind sowie zum Verschlüsseln und Entschlüsseln des/der zugeordneten Dokuments/Dokumente verwendet werden, eine Indexdatenbank, die zum Speichern von Indexschlüsseln konfiguriert ist, welche den Indizes im Indexspeicher zugeordnet sind sowie zum Verschlüsseln und Entschlüsseln der zugeordneten Indizes verwendet werden, und eine Nutzerschlüsseldatenbank, die zum Speichern der Nutzerschlüssel konfiguriert ist, wobei jeder Nutzerschlüssel mehreren Indexschlüsseln und mehreren Dokumentenschlüsseln zugeordnet ist, indem der jeweilige Nutzerschlüssel verwendet wird, um die zugehörigen Indexschlüssel in der Indexdatenbank sowie die zugeordnete Dokumentenschlüssel in der Dokumentendatenbank zu verschlüsseln und zu entschlüsseln. Der Suchserver ist dazu konfiguriert, eine oder mehrere Suchbegriffe aus einer gestellten Suchanfrage zu extrahieren, um den zugänglichen Teil des verschlüsselten Indexschlüssels mit dem Nutzerschlüssel zu entschlüsseln, der dem Nutzer gehört, der die Suchanfrage stellt, um den Indexspeicher basierend auf den entschlüsselten Indexschlüsseln nach Vorkommen des einen oder der mehreren Suchbegriffe aus der angeforderten Suchanfrage zu durchsuchen, und ein Suchergebnis an ein Endgerät zu senden.

Die EP 3 364 316 A1 beschreibt ein Verfahren zum Erzeugen einer durchsuchbaren verschlüsselten Datenbank. Das Verfahren umfasst ein Empfangen mehrerer sensibler Datensätze, die persönliche Informationen verschiedener Nutzer umfassen, ein Identifizieren eines oder mehrerer durchsuchbarer Felder für die sensiblen Datensätze, wobei jedes durchsuchbare Feld einer Teilmenge der persönlichen Informationen für einen Nutzer zugeordnet ist, ein Erzeugen eines durchsuchbaren Feldindexes für jedes der einen oder mehreren durchsuchbaren Felder und ein Verschlüsseln der sensiblen Datensätze unter Verwendung eines Datenbankverschlüsselungsschlüssels.

Die WO 2018/104275 A1 beschreibt ein computerimplementiertes Verfahren zur Bereitstellung von Datensätzen. Das Verfahren umfasst eine Speicherung einer Vielzahl von Datensätzen in einzeln verschlüsselter Form auf ein Speichermedium eines Server-Computersystems, wobei das Server-Computersystem nicht entschlüsseln kann; eine Speicherung eines unverschlüsselten Index durch das Server-Computersystem, wobei der unverschlüsselte Index Token umfasst, die durch Tokenisierung mehrerer der Feldwerte der unverschlüsselten Datensätze erzeugt wurden, wobei der Index frei ist von Zeigern auf einzelne Felder dieser Datensätzen, die das Token beinhalten; einen Empfang einer Suchanfrage eines Client-Computersystems durch das Server-Computersystem; als Antwort auf die Suchanfrage, eine Durchführung der angefragten Suche in dem Index um ein oder mehrere der Datensätze als Ergebnis der Suche zu identifizieren; und eine Zurückgabe der identifizierten ein oder mehreren Datensätze in verschlüsselter Form an das Client-Computersystem.

Der Erfindung liegt die Aufgabe zugrunde, ein verbessertes Verfahren für Suchen in einer Datenbank zu schaffen, insbesondere ein Verfahren, welches eine verbesserte Sicherheit für die in der Datenbank gespeicherten Datenelemente bietet.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren für eine verschlüsselte Suche in einer Datenbank. Hierzu wird eine durchsuchbare, verschlüsselte Indexstruktur der Datenbank auf einem ersten Server bereitgestellt. Die Indexstruktur umfasst einen ersten Index, welcher eine erste Aufstellung der von den Datensätzen der Datenbank umfassten Datenelemente umfasst. Die Datenelemente des ersten Index sind jeweils unter Verwendung eines ersten kryptographischen Schlüssels verschlüsselt. Die Indexstruktur umfasst ferner einen zweiten Index, welcher eine zweite Aufstellung der von den Datensätzen der Datenbank umfassten Datenelemente umfasst. Die Datenelemente des zweiten Index sind jeweils unter Verwendung eines zweiten kryptographischen Schlüssels verschlüsselt. Den Datenelementen in dem zweiten Index sind jeweils erste Angaben zugeordnet, aus welchen sich eine Häufigkeit des Auftretens der entsprechenden Datenelemente in der Datenbank ergibt. Die Indexstruktur umfasst ferner dritten Index, welcher eine dritte Aufstellung der von den Datensätzen der Datenbank umfassten Datenelemente umfasst. Die Datenelemente des dritten Index sind jeweils unter Verwendung eines dritten kryptographischen Schlüssels verschlüsselt. Den Datenelementen in dem dritten Index sind jeweils zweite Angaben zugeordnet, welche jeweils in adressierbarerer Weise die Datensätze identifizieren, in denen die Datenelemente jeweils gespeichert sind. Ein Zugriff auf jeden der Indizes setzt jeweils einen Nachweis einer indexindividuellen Zugriffsberechtigung voraus.

Das Verfahren umfasst:
- Empfangen einer Suchanfrage zum Ausführen einer Suche in der Indexstruktur, wobei die Suchanfrage einen oder mehrere der Indizes identifiziert, auf welchen jeweils eine Suche ausgeführt werden soll, wobei die Suchanfrage für jeden der identifizierten Indizes jeweils ein oder mehrere Datenelemente als Suchbegriffe umfasst, wobei die Suchanfrage für jeden der identifizierten Indizes jeweils einen Berechtigungsnachweis umfasst,
- Prüfen der Berechtigungsnachweise für die identifizierten Indizes,
- Ausführen der Suchen auf den identifizierten Indizes, für welche jeweils ein gültiger Berechtigungsnachweis vorliegt,
- Senden der Suchergebnisse in Antwort auf die Suchanfrage.

Ausführungsformen können den Vorteil haben, dass eine Indexstruktur bereitgestellt wird, welche ein effizientes Suchen in der Datenbank bzw. in den von einer Datenbank umfassten Daten ermöglicht. Die Datenstruktur umfasst zumindest einen ersten, zweiten und dritten Index. Die Indizes erlauben jeweils Suchen in den Datenelementen mit unterschiedlichen Schwerpunkten. Jeder der Indizes bzw. die Datenelemente in unterschiedlichen Aufstellungen sind jeweils unter Verwendung eines anderen kryptografischen Schlüssels verschlüsselt. Um Suchanfragen auf den unterschiedlichen Indizes formulieren zu können, d.h. um die unterschiedlichen Indizes nutzen zu können, sind Kenntnisse über die entsprechenden kryptografischen Schlüssel notwendig, um Suchanfragen erstellen zu können, welche ebenfalls verschlüsselt sind. Suchen auf den Indizes erfolgen jeweils in verschlüsselter Form, d.h. bei den Suchanfragen handelt es sich um Suchanfragen, welche Suchbegriffe in Form von verschlüsselten Datenelementen verwenden. Die Verschlüsselung der entsprechenden Suchbegriffe kann dabei von dem die Suche formulierenden Computersystem oder von dem die Indexstruktur verwaltenden Computersystem im Zuge des Ausführens der Suche erfolgen. Dabei kann eine notwendige Voraussetzung für einen Zugriff auf einen der Indizes Kenntnis von dem für den entsprechenden Index verwendeten kryptografischen Schlüssel sein.

Die Indizes umfassen jeweils eine Aufstellung der von den Datensätzen der Datenbank umfassten Datenelemente. Die einzelnen Datenelemente sind dabei jeweils individuell unter Verwendung eines kryptografischen Schlüssels verschlüsselt. Für die Datenelemente in dem ersten Index wird beispielsweise ein erster kryptografischer Schlüssel verwendet. Für die Datenelemente in dem zweiten Index wird beispielsweise ein zweiter kryptografischer Schlüssel und für die Datenelemente in dem dritten Index wird beispielsweise ein dritter kryptografischer Schlüssel verwendet.

Der erste Index umfasst eine erste Aufstellung der von dem Datensatz der Datenbank umfassten Datenelemente. Wird in dieser Aufstellung, d.h. in den ersten Indizes, nach einem Datenelement gesucht, so kann die Antwort beispielsweise sein, dass das entsprechende Datenelement in der Aufstellung und damit in der Datenbank vorhanden ist, oder dass das entsprechende Datenelement nicht in der Aufstellung und damit nicht in der Datenbank vorhanden ist. Mit anderen Worten kann unter Verwendung des ersten Index nach einem Vorhandensein von Datenelementen der Datenbank gesucht werden.

Der zweite Index verwendet neben einer zweiten Aufstellung der von dem Datensatz der Datenbank umfassten Datenelemente erste Angaben, welche jeweils den Datenelementen zugeordnet sind und aus welchen sich eine Häufigkeit des Auftretens der entsprechenden Datenelemente in der Datenbank ergibt. Unter Verwendung des zweiten Index können mithin statistische Suchanfragen verarbeitet werden. Beispielsweise wird nach ein oder mehreren Datenelementen in der Datenbank gesucht. Sind die entsprechenden Datenelemente in der zweiten Aufstellung und damit in der Datenbank vorhanden, so kann als Ergebnis der Suche die Häufigkeit des Auftretens der gesuchten Datenelemente in der Datenbank ausgegeben werden.

Der dritte Index umfasst schließlich neben einer dritten Aufstellung der von den Datensätzen der Datenbank umfassten Datenelemente zweite Angaben. In diesen zweiten Angaben sind jeweils den Datenelementen zugeordnet und identifizieren in adressierbarer Weise die Datensätze, in denen die entsprechenden Datenelemente jeweils gespeichert sind. Somit ermöglicht der dritte Index, Suchen nach Datenelementen der Datenbank auszuführen, deren Ergebnis die Datensätze identifizieren, in denen die gesuchten Datenelemente umfasst sind. Anhand der Suchergebnisse können die identifizierten Datensätze adressiert werden, d.h. es können Leseanfragen erstellt werden zum Auslesen der entsprechenden Datensätze. Somit kann eine Suche unter Verwendung des dritten Indexes die Voraussetzung für ein Auslesen von Datensätzen aus der Datenbank schaffen. Auch durch ein Auslesen der Datensätze aus der Datenbank können Kontextinformationen der Datenelemente bzw. Informationen zu deren Abhängigkeiten erhalten werden.

Ausführungsformen können somit den Vorteil haben, dass die zuvor beschriebene dreiteilige Indexstruktur, welche drei Indizes umfasst, ein verschlüsseltes Suchen in einer Datenbank mit drei unterschiedlichen Reichweiten ermöglicht. Jeder der Indizes ermöglicht beispielsweise eine Suche in der gesamten Menge der von der Datenbank umfassten Datenelemente. Dabei liefert der erste Index als Suchergebnis aber beispielsweise lediglich Informationen darüber, ob ein gesuchtes Datenelement in der Datenbank enthalten ist oder nicht. Aus einem solchen Suchergebnis kann mithin geschlussfolgert werden, ob die Datenbank relevante Informationen umfasst oder nicht. Wie diese relevanten Informationen tatsächlich aussehen, lässt sich aus dieser Suche nicht schlussfolgern. Hierzu ist beispielsweise ein Auslesen der entsprechenden Datensätze, welche die gesuchten Datenelemente umfassen, notwendig. Voraussetzung für ein solches Auslesen von Datensätzen ist beispielsweise ein Identifizieren der auszulesenden Datensätze. Mithin ist es notwendig, zunächst entsprechende Informationen zum Identifizieren der entsprechenden Datensätze zu erlangen. Hierzu ist eine Suche mit einer weiteren Reichweite notwendig. Beispielsweise eine Suche auf dem dritten Index.

Der zweite Index ermöglicht statistische Suchen nach Datenelementen in der Datenbank. Beispielsweise kann unter Verwendung des zweiten Index ermittelt werden, mit welcher Häufigkeit ein bestimmtes Datenelement in der Datenbank auftaucht. Entsprechende statistische Ergebnisse können per se bereits einen Wert für statistische Analysen darstellen. Darüber hinaus kann anhand entsprechender statistischer Ergebnisse beispielsweise auch beurteilt werden, ob die entsprechende Datenbank relevante Ergebnisse zu einem gesuchten Datenelement aufweist. Beispielsweise kann ein nur ein einmaliges Auftauchen eines gesuchten Datenelementes in der Datenbank ein Hinweis darauf sein, dass die Datenbanken keine oder kaum relevante Informationen zu diesem Datenelement umfasst und das Auftauchen eher zufälliger Natur ist. Beispielsweise kann auch eine Kombination aus zwei Datenelementen von Interesse sein. Werden die beiden Datenelemente in dem zweiten Index gesucht und unterscheiden sich die Häufigkeiten, mit welchen die beiden Datenelemente in der Datenbank auftauchen signifikant voneinander, so kann beispielsweise darauf geschlossen werden, dass die Datenbank Informationen zu den einzelnen Datenelementen für sich, aber nicht für die Kombination aus beiden Datenelementen umfasst. Zum Beispiel kann eines der Datenelemente ein- oder zweimal auftauchen, während das andere Datenelement wesentlich häufiger auftaucht, beispielsweise 10-, 20-, 100-mal oder öfters.

Der dritte Index ermöglicht schließlich ein Identifizieren derjenigen Datensätze, welche gesuchte Datenelemente umfassen. Wenn beispielsweise aufgrund von Suchen auf dem ersten und/oder zweiten Index festgestellt worden ist, dass die Datenbank potenziell relevante Informationen umfasst, so können unter Verwendung des dritten Index diejenigen Datensätze identifiziert werden, welche die entsprechenden Datenelemente umfassen. Unter Verwendung von Suchergebnissen von Suchen auf dem dritten Index können Leseanfragen zum Auslesen der entsprechenden Datensätze erzeugt werden.

Für eine Verwendung der entsprechenden Indizes ist beispielsweise jeweils eine Kenntnis der indexindividuellen kryptografischen Schlüssel, mit welchen die Datenelemente verschlüsselt sind, oder ein Zugriff auf die entsprechenden kryptografischen Schlüssel, notwendig. Somit können beispielsweise unterschiedliche Suchrechte basierend auf unterschiedlichen Zugriffsrechten auf die Indizes implementiert werden. Beispielsweise können Suchrechte auf den ersten, zweiten und/oder dritten Index beschränkt werden. Bei jedem Zugriff auf einen der Indizes, d.h. für jede Suche in einem der Indizes, ist jeweils ein Nachweis einer indexindividuellen Zugriffsberechtigung notwendig. Entsprechende Zugriffsberechtigungen können beispielsweise in einer Kenntnis der entsprechenden kryptografischen Schlüssel oder einem Zugriff auf die entsprechenden kryptografischen Schlüssel bestehen. Alternativ oder zusätzlich kann der Nachweis der Zugriffsberechtigung einen expliziten Berechtigungsnachweis umfassen, welcher eine Zugriffsberechtigung nachweist. Der entsprechende Berechtigungsnachweis kann beispielsweise ein Zertifikat und/oder eine Zertifizierungskette umfassen.

Eine Suchanfrage identifiziert beispielsweise den Index, auf welchem die Suche ausgeführt werden soll und umfasst ferner als Suchbegriffe Datenelemente. Zudem umfasst sie beispielsweise einen Berechtigungsnachweis, welche eine indexindividuelle Zugriffsberechtigung auf den in der Suchanfrage identifizierten Index nachweist. Der entsprechende Berechtigungsnachweis wird geprüft. Falls dieser valide ist, wird die Suche gemäß der Suchanfrage auf dem identifizierten Index ausgeführt. Das Ergebnis der Suche wird in Antwort auf die Suchanfrage an das anfragende Computersystem gesendet.

Ausführungsformen können insbesondere für Datenbanken mit hohen Sicherheitsanforderungen, auf welche regelmäßig Dritte Zugriff benötigen, von Vorteil sein. Beispielsweise kann es sich bei einer solchen Datenbank um eine Datenbank einer Sicherheitsbehörde, etwa einer Landespolizei handeln. Andere Landespolizeibehörden oder Bundespolizeibehörden können über die Indexstruktur beispielsweise Zugriff auf Such- und/oder Statistikfunktionen erhalten, ohne jedoch Zugriff auf die zugrundeliegenden Daten bzw. Datensätze der Datenbank zu erhalten, welche mithin von externen Zugriffen abgeschnitten sind. Für einen Zugriff auf zugrundeliegende Daten bzw. Datensätze ist beispielsweise eine zusätzliche Freigabe notwendig, welche von der Landespolizeibehörde oder einer unabhängigen Instanz, wie etwa einem Gericht, erteilt wird. Die Erteilung einer solchen zusätzliche Freigabe erfolgt beispielsweise nur fallspezifisch und setzt eine Suche in der Indexstruktur voraus, aus welcher sich die tatsächliche Relevanz der angefragten Datensätze ergibt.

Unter einer "Datenbank" wird hier eine gespeicherte Menge von Daten verstanden. Die Menge von Daten kann strukturiert sei, beispielsweise gemäß einer für die Datenbank vorgegebenen Struktur. Ferner kann zur Verwaltung der Daten der Datenbank ein "Datenbankmanagementsystem" bzw. eine Datenverwaltungssoftware bereitgestellt werden. Unter einem "Datenbankmanagementsystem" wird hier eine auf einem Computersystem ausgeführte Datenverwaltungssoftware zum Speichern und Wiedergewinnen von Daten in einer Datenbank verstanden. Beispielsweise gibt das Datenbankmanagementsystem die für die Speicherung der Daten zu verwendende Struktur vor. Je nach der verwendeten Datenverwaltungssoftware können die Daten in unterschiedlicher Form bzw. unter Verwendung unterschiedlicher Strukturen gespeichert werden. Beispielsweise werden die Daten in Datensätzen aus jeweils mehreren Datenfeldern gespeichert werden.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Ein Prozessor umfasst beispielsweise ein Rechenwerk, ein Steuerwerk, Register und Datenleitungen zur Kommunikation mit anderen Komponenten. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen.

Eine Kommunikation kann beispielsweise über ein Netzwerk erfolgen. Unter einem "Netzwerk" wird hier jedes Übertragungsmedium mit einer Anbindung zur Kommunikation verstanden, insbesondere eine lokale Verbindung oder ein lokales Netzwerk, insbesondere ein Local Area Network (LAN), ein privates Netzwerk, insbesondere ein Intranet, und ein digitales privates Netzwerk (Virtual Private Network - VPN). Beispielsweise kann ein Computersystem eine Standardfunkschnittstelle zur Anbindung an ein WLAN aufweisen. Ferner kann es sich um ein öffentliches Netzwerk, wie beispielsweise das Internet handeln. Je nach Ausführungsform kann diese Verbindung auch über ein Mobilfunknetz hergestellt werden.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte weitergegeben werden darf, sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten Schlüssels zu verschlüsseln und digitale mit dem privaten Schlüssel erstellte Signaturen zu prüfen. Ein privater Schlüssel ermöglicht es seinem Inhaber, mit dem öffentlichen Schlüssel verschlüsselte Daten zu entschlüsseln oder digitale Signaturen zu erstellen. Eine mit einem privaten Schlüssel erstellte Signatur kann mit dem zugehörigen öffentlichen Schlüssel verifiziert werden.

Die Erstellung einer digitalen Signatur, im Folgenden auch lediglich als "Signatur" bezeichnet, ist ein kryptographisches Verfahren, bei dem zu beliebigen Daten ein weiterer Datenwert, welcher als "Signatur" bezeichnet wird, berechnet wird. Bei einer Signatur kann es sich zum Beispiel um eine mit einem privaten kryptographischen Schlüssel verschlüsselten Hashwert der Ausgangsdaten handeln.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikataussteller zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen Schlüssel der Allgemeinheit zur Verfügung stellt, ermöglicht sie es den Nutzern asymmetrischer Kryptosysteme den öffentlichen Schlüssel einer Identität, beispielsweise einer Person, einer Organisation, oder Computersystem, zuzuordnen.

Nach Ausführungsformen handelt es sich bei der ersten, zweiten und/oder dritten Aufstellung jeweils um eine Aufstellung aller von der Datenbank umfassten Datenelemente.

Nach Ausführungsformen handelt es sich bei dem ersten kryptographischen Schlüssel, dem zweiten kryptographischen Schlüssel und dem dritten kryptographischen Schlüssel jeweils um einen indexindividuellen öffentlichen kryptographischen Schlüssel. Ausführungsformen können den Vorteil haben, dass die zum Verschlüsseln der Datenelemente in die unterschiedlichen Indizes verwendeten kryptografischen Schlüssel beispielsweise nicht bekannt sein können. Mithin können andere Computersysteme die Verschlüsselung nachbilden, ohne damit aber selbst in die Lage versetzt zu werden die in den Indizes gespeicherten Datenelemente selbst zu entschlüsseln. Beispielsweise können so verschlüsselte Indizes auf einem Server bereitgestellt werden für Suchanfragen, ohne dass der Server selbst Kenntnis davon besitzt oder erlangen könnte, welche Datenelemente die Datenbank umfasst. Beispielsweise werden die als Suchbegriffe verwendeten Datenelemente in der Suchanfrage in Abhängigkeit von den zu untersuchenden Indizes mit den entsprechenden öffentlichen kryptografischen Schlüsseln verschlüsselt. Aus Sicht des die Indizes bereitstellenden Servers werden also verschlüsselte Datenelemente als Suchbegriff empfangen, es wird in der Menge der jeweils individuell verschlüsselten Datenelemente nach Übereinstimmungen zwischen den Datenelementen der Aufstellungen und den verschlüsselten Suchbegriffen gesucht. Im Falle einer Übereinstimmung wird in Abhängigkeit von den Details der Suchanfrage und/oder dem durchsuchten Index ein Suchergebnis generiert. Im Zuge dieses gesamten Prozesses erlangt der Server beispielsweise keinerlei Kenntnis darüber, welche Datenelemente er bereitstellt und/oder nach welchen Datenelementen er sucht.

Beispielsweise kann die öffentliche Verteilung des öffentlichen kryptografischen Schlüssels auch beschränkt werden. Beispielsweise werden die öffentlichen kryptografischen Schlüssel nur an bestimmte Computersysteme ausgeteilt, welche eine Zugriffsberechtigung auf den entsprechenden Index besitzen. Beispielsweise werden die entsprechenden öffentlichen kryptografischen Schlüssel zusammen mit dem entsprechenden Berechtigungsnachweis zum Nachweis einer Zugriffsberechtigung für das abfragende Computersystem bereitgestellt. Beispielsweise kann auch der Berechtigungsnachweis den entsprechenden öffentlichen kryptografischen Schlüssel umfassen. Beispielsweise kann im Falle eines Berechtigungsnachweises in Form eines Zertifikats, welcher zusätzlichen einen öffentlichen kryptografischen Schlüssel desjenigen Computersystems umfasst, für welches der Berechtigungsnachweis ausgestellt wird, den indexindividuellen öffentlichen kryptografischen Schlüssel in verschlüsselter Form umfassen. Die Verschlüsselung des indexindividuellen öffentlichen kryptografischen Schlüssels kann dabei unter Verwendung des öffentlichen kryptografischen Schlüssels des auslesenden Computersystems erfolgen. Somit kann das auslesende Computersystem unter Verwendung seines symmetrischen Schlüssels den indexindividuellen öffentlichen kryptografischen Schlüssel entschlüsseln und unter dessen Verwendung Suchbegriffe für Suchen auf dem entsprechenden Index erstellen.

Nach Ausführungsformen handelt es sich bei dem ersten kryptographischen Schlüssel, dem zweiten kryptographischen Schlüssel und dem dritten kryptographischen Schlüssel jeweils um einen indexindividuellen symmetrischen Schlüssel.

Ausführungsformen können den Vorteil haben, dass im Falle einer symmetrischen Verschlüsselung der Besitzer des symmetrischen Schlüssels beispielsweise dazu in die Lage versetzt werden kann, nicht nur die Verschlüsselung der Datenelemente nachzubilden und somit gültige Suchbegriffe für Suchen auf den Indizes zu erstellen, sondern darüber hinaus auch entsprechende Verschlüsselungen wieder entschlüsseln kann. Dies kann beispielsweise von Vorteil sein, falls auch die ersten und/oder zweiten Angaben jeweils mit dem indexindividuellen kryptografischen Schlüssel verschlüsselt sind. In diesem Falle sind beispielsweise die Suchergebnisse, welche das anfragende Computersystem empfängt, mit demselben kryptografischen Schlüssel verschlüsselt wie die Suchbegriffe und die Datenelemente in den Indizes. Das anfragende Computersystem kann die verschlüsselten Angaben, welche das empfangene Suchergebnis bereitstellt unter Verwendung des symmetrischen kryptografischen Schlüssels entschlüsseln und somit auf diese zugreifen. Andere Teilnehmer des Verfahrens, wie beispielsweise ein die Indexstruktur bereitstellender Server, erhalten in diesem Fall beispielsweise keine Kenntnis und keinen Zugriff auf die ersten und/oder zweiten Angaben in verschlüsselter Form.

Der entsprechende symmetrische kryptografische Schlüssel kann im anfragenden Computersystem beispielsweise zusammen mit dem Berechtigungsnachweis, welcher die Zugriffsberechtigung des auslesenden Computersystems auf dem entsprechenden Index nachweist, empfangen. Beispielsweise kann der Berechtigungsnachweis den symmetrisch kryptografischen Schlüssel in verschlüsselter Form umfassen. Beispielsweise ist der symmetrische kryptografische Schlüssel mit einem öffentlichen kryptografischen Schlüssel des auslesenden Computersystems verschlüsselt, sodass nur das auslesende Computersystem den verschlüsselten symmetrischen kryptografischen Schlüssel entschlüsseln und nutzen kann.

Nach Ausführungsformen handelt es sich bei dem ersten kryptographischen Schlüssel, dem zweiten kryptographischen Schlüssel und dem dritten kryptographischen Schlüssel jeweils um ein Kombination aus einem gemeinsamen öffentlichen kryptographischen Schlüssel und einem indexindividuellen symmetrischen kryptographischen Schlüssel.

Ausführungsformen können den Vorteil haben, dass durch Verwendung des gemeinsamen öffentlichen kryptografischen Schlüssels sichergestellt werden kann, dass ausschließlich der Besitzer des zugehörigen privaten kryptografischen Schlüssels dazu in die Lage versetzt wird, verschlüsselte Datenelemente entschlüsseln zu können. Beispielsweise erfolgt die Verschlüsselung der Datenelemente durch ein die Datenbank verwaltendes Computersystem. Mithin besitzt ausschließlich das entsprechende die Datenbank verwaltende Computersystem die Möglichkeit, die verschlüsselten Datenelemente zu entschlüsseln. Weder ein die Indexstruktur bereitstellendes Computersystem, wie ein Server, oder ein anfragendes Computersystem, welches Suchanfragen an die Indexstruktur stellt, können die von der Indexstruktur umfassten verschlüsselten Datenelemente entschlüsseln. Durch eine zusätzliche symmetrische kryptografische Verschlüsselung unter Verwendung eines indexindividuellen symmetrischen kryptografischen Schlüssels kann ferner der Zugriff auf die Indizes bzw. die Möglichkeit sinnvolle Suchanfragen für die Indizes zu erstellen beschränkt werden. Die symmetrische Verschlüsselung kann beispielsweise im Zuge eines Bereitstellens der verschlüsselten Datenelemente zum Erstellen der Indexstruktur erfolgen. Beispielsweise verschlüsselt ein die Datenbank verwaltendes Computersystem die Datenelemente zunächst mit einem gemeinsamen öffentlichen Schlüssel und stellt anschließend Kopien der Datenelemente, welche jeweils mit einem anderen Index wie der der symmetrischen kryptografischen Schlüssel verschlüsselt werden. Den entsprechenden symmetrischen kryptografischen Schlüssel stellt beispielsweise das die Datenbank verwaltende Computersystem anfragenden Computersystemen zur Verfügung, damit diese Suchanfragen für die Indizes der Indexstruktur erzeugen können. Beispielsweise wird der symmetrische kryptografische Schlüssel als verschlüsselter Bestandteil von Berechtigungsnachweises für die abfragenden Computersysteme bereitgestellt werden. Der öffentliche kryptografische Schlüssel kann als öffentlicher kryptografischer Schlüssel frei zur Verfügung gestellt werden oder kann ebenfalls als Bestandteil des Berechtigungsnachweises zur Verfügung gestellt werden. Nach einer weiteren Ausführungsform kann die symmetrische kryptografische Verschlüsselung im Zuge eines Erstellens der Indexstruktur erfolgen. Beispielsweise wird eine Aufstellung der von den Datensätzen der Datenbank umfassenden Datenelemente bereitgestellt, wobei die einzelnen Datenelemente jeweils mit dem gemeinsamen öffentlichen kryptografischen Schlüssel verschlüsselt sind. Dies kann beispielsweise durch ein die Datenbank verwaltendes Computersystem erfolgen. Die entsprechende Aufstellung wird verwendet, um drei Kopien zu erstellen, wobei jede dieser Kopien bzw. die von der entsprechenden Kopie umfassten Datenelemente jeweils mit einem indexindividuellen symmetrischen kryptografischen Schlüssel verschlüsselt werden. Diese symmetrische Verschlüsselung kann beispielsweise durch ein die Indexstruktur bereitstellendes Computersystem, wie beispielsweise einen entsprechenden Server, erfolgen. Das entsprechende Computersystem kann beispielsweise den anfragenden Computersystemen jeweils in Abhängigkeit von ihren Zugriffsberechtigungen die zugehörigen indexindividuellen symmetrischen kryptografischen Schlüssel zur Verfügung stellen. Ein anfragendes Computersystem wird dadurch in die Lage versetzt, ein Datenelement, welches als Suchbegriff verwendet werden soll, zunächst mit dem öffentlichen kryptografischen Schlüssel des die Datenbank verwaltenden Computersystems zu verschlüsseln und zusätzlich mit einem indexindividuellen symmetrischen kryptografischen Schlüssel zu verschlüsseln.

Der gemeinsame öffentliche kryptographische Schlüssel wird beispielsweise von dem die Datenbank verwaltenden Computersystem bereitgestellt. Die indexindividuellen symmetrischen kryptographischen Schlüssel werden beispielsweise von dem die Datenbank verwaltenden Computersystem oder von dem die Indexstruktur bereitstellenden Computersystem bereitgestellt.

Ausführungsformen können den Vorteil haben, dass durch die Verwendung des öffentlichen kryptografischen Schlüssels eine grundsätzliche Verschlüsselung der in der Indexstruktur bereitgestellten Datenelemente sichergestellt werden kann, während durch die Verwendung der symmetrischen Verschlüsselung eine Beschränkung von Suchmöglichkeiten auf individuelle Indizes der Indexstruktur begrenzt werden kann.

Nach Ausführungsformen handelt es sich bei dem zweiten kryptographischen Schlüssel und dem dritten kryptographischen Schlüssel jeweils um einen indexindividuellen Re-Encryption-Schlüssel eines asymmetrischen Proxy Re-Encryption-Verfahrens, welcher unter Verwendung eines geheimen kryptographischen Schlüssels eines die Datenbank verwaltenden Computersystems und eines indexindividuellen öffentlichen kryptographischen Schlüssels, dessen zugehöriger privater kryptographischer Schlüssel ein oder mehreren zum Zugriff auf den entsprechenden Index berechtigten Computersystemen zur Verfügung steht, erzeugt wird.

Ausführungsformen können den Vorteil haben, dass eine für das auslesende Computersystem bzw. das zum Zugriff auf den entsprechenden Index berechtigte Computersystem individuelle Verschlüsselung der Datenelemente in der Indexstruktur ermöglicht werden kann. Die asymmetrische Proxy-Re-Encryption kann beispielsweise durch das die Indexstruktur bereitstellende Computersystem erfolgen. Beispielsweise kann das die Indexstruktur bereitstellende Computersystem für eine Suche eines anfragenden Computersystems eine individuelle Kopie der Indexstruktur und/oder von Indizes der Indexstruktur erstellen. Die Datenelemente der entsprechenden Kopien sind beispielsweise unter Verwendung der Proxy-Re-Encryption derart verschlüsselt, dass ausschließlich dasjenige Computersystem, für welches sie erstellt wurden, in die Lage versetzt wird, die entsprechenden Datenelemente zu entschlüsseln. Ausführungsformen können den Vorteil haben, dass das anfragende Computersystem nicht nur in die Lage versetzt wird, verschlüsselte Suchbegriffe zu erzeugen, sondern zudem auch in der Lage ist, wenn die Verschlüsselung z. B. verschlüsselt wird, in der Indexstruktur zu entschlüsseln, während dies beispielsweise dem die Indexstruktur bereitstellende Computersystem, wie etwa einem Server, verwehrt wird.

Die entsprechenden Datenelemente werden beispielsweise unter Verwendung eines öffentlichen kryptografischen Schlüssels des die Datenbank verwaltenden Computersystems verschlüsselt bereitgestellt. Das die Datenbank verwaltende Computersystem erstellt unter Verwendung eines zu dem öffentlichen kryptografischen Schlüssel zugehörigen geheimen kryptografischen Schlüssels und eines indexindividuellen öffentlichen kryptografischen Schlüssels einen Re-Encryption-Schlüssel, welcher es entweder selbst zur Proxy-Re-Encryption der verschlüsselten Datenelemente verwendet oder einem die Indexstruktur bereitstellenden Computersystem für eine Proxy-Re-Encryption zur Verfügung stellt. Den zugehörigen indexindividuellen privaten kryptografischen Schlüssel besitzt beispielsweise das abfragende Computersystem oder er wird dem anfragenden Computersystem zur Verfügung gestellt. Dies kann beispielsweise im Zuge des Bereitstellens des Berechtigungsnachweises erfolgen. Beispielsweise kann der Berechtigungsnachweis den entsprechenden privaten kryptografischen Schlüssel in verschlüsselter Form umfassen.

Eine Proxy-Re-Encryption kann insbesondere von Vorteil sein, wenn die ersten und zweiten Angaben ebenfalls mit dem kryptografischen Schlüssel verschlüsselt sind, wie die entsprechenden Datenelemente. Im vorliegenden Fall wäre dies eine Proxy-Re-Encryption unter Verwendung des entsprechenden indexindividuellen Re-Encryption-Schlüssels. Werden die entsprechend verschlüsselten Angaben als Suchergebnis dem anfragenden Computersystem zur Verfügung gestellt, so kann das anfragende Computersystem und nur dieses die Suchergebnisse entschlüsseln, da nur das anfragende Computersystem über den entsprechenden privaten kryptografischen Schlüssel verfügt, unter Verwendung dessen eine Entschlüsselung möglich ist.

Im Zuge einer Proxy-Re-Encryption verschlüsselt erster Teilnehmer, etwa das die Datenbank verwaltende Computersystem, eine Nachricht m, etwa Elemente der Indexstruktur, mit einem dem ersten Teilnehmer zugeordneten öffentlichen kryptographischen Schlüssel pk₁, was in dem Chiffrat c₁=enc(pk₁, m) resultiert. Der erste Teilnehmer verfügt beispielsweise über neben dem öffentlichen kryptographischen Schlüssel pk₁ über eine zugehörigen privaten kryptographischen Schlüssel sk₁. Dieses Chiffrat c₁ stellt der erste Teilnehmer einem zweiten Teilnehmer, dem Proxy, beispielsweise dem Indexserver, zur Verfügung. Der erste Teilnehmer legt fest, dass ein dritter Teilnehmer, beispielsweise ein anfragendes Computersystem, das Chiffrat c₁ entschlüsseln können sollen, und verwendet dessen öffentlichen Schlüssel pk₃ und einen privaten Schlüssel des ersten Teilnehmer sk₁, um einen Re-Encryption-Schlüssel rk_{1→3} zu erstellen. Dieser Re-Encryption-Schlüssel rk_{1→3} wird von dem ersten Teilnehmer an den Proxy gesendet. Der Proxy verfügt dabei über keinen kryptographischen Schlüssel, mit welchem das Chiffrat c₁ entschlüsselt werden kann. Der Proxy führt eine Umverschlüsselung unter Verwendung des Re-Encryption-Schlüssel rk_{1→3} aus, was in einem Chiffrat c₃=reenc(rk_{1→3}, c₁) resultiert. Dieses Chiffrat c₃ wird beispielsweise auf Anfrage an den dritten Teilnehmer gesendet, welcher über das asymmetrische kryptographische Schlüsselpaar (sk₃, pk₃) mit dem öffentlichen kryptographischen Schlüssel pk₃ und dem zugehörigen privaten kryptographischen Schlüssel sk₃ verfügt. Unter Verwendung des privaten kryptographischen Schlüssel sk₃ kann der dritte Teilnehmer das Chiffrat c₃ entschlüsseln und die ursprüngliche Nachricht m wiederherstellen, d.h. m=dec(sk₃, c₃).

Nach Ausführungsformen handelt es sich auch bei dem ersten kryptographischen Schlüssel um einen indexindividuellen Re-Encryption-Schlüssel eines asymmetrischen Proxy Re-Encryption-Verfahrens, welcher unter Verwendung eines geheimen kryptographischen Schlüssels eines die Datenbank verwaltenden Computersystems und eines indexindividuellen öffentlichen kryptographischen Schlüssels, dessen zugehöriger privater kryptographischer Schlüssel ein oder mehreren zum Zugriff auf den entsprechenden Index berechtigten Computersystemen zur Verfügung steht, erzeugt wird.

Nach Ausführungsformen werden die Datenelemente des ersten, zweiten und dritten Index im Zuge des Erstellens der entsprechenden Indizes jeweils unter Verwendung eines gemeinsamen oder indexindividuellen öffentlichen Schlüssels des die Datenbank verwaltenden Computersystem verschlüsselt. Die Proxy Re-Encryption wird unter Verwendung des jeweiligen indexindividuellen Re-Encryption-Schlüssel jeweils auf die unter Verwendung des gemeinsamen oder indexindividuellen öffentlichen Schlüssels verschlüsselten Datenelemente angewendet.

Nach Ausführungsformen werden die Suchergebnisse vor dem Senden unter Verwendung eines indexindividuellen Re-Encryption-Schlüssels eines Proxy Re-Encryption-Verfahrens umverschlüsselt, welcher unter Verwendung eines geheimen kryptographischen Schlüssels eines die Datenbank verwaltenden Computersystems und eines indexindividuellen öffentlichen kryptographischen Schlüssels, dessen zugehöriger privater kryptographischer Schlüssel ein oder mehreren zum Zugriff auf den entsprechenden Index berechtigten Computersystemen zur Verfügung steht, erzeugt wird.

Ausführungsformen können den Vorteil haben, dass die Suchergebnisse, z. B. erste oder zweite Angaben, vor das Senden an das anfragende Computersystem umverschlüsselt werden. Beispielsweise sind die entsprechenden Suchergebnisse, z. B. erste oder zweite Angaben, unter Verwendung eines öffentlichen kryptografischen Schlüssels des die Datenbank verwaltenden Computersystems verschlüsselt. Das die Indexstruktur bereitstellende und die Suche ausführende Computersystem, beispielsweise ein Server, besitzt somit keine Möglichkeit, die verschlüsselten Daten der Indexstruktur zu entschlüsseln. Im Zuge des Bereitstellens von Daten der Indexstruktur als Suchergebnisse, werden diese umverschlüsselt. Eine Umverschlüsselung kann den Vorteil haben, dass im Zuge des Ausführens der Umverschlüsselung die entsprechenden Daten nicht entschlüsselt werden. Somit besitzt das die Umverschlüsselung ausführende Computersystem keinen Zugriff auf die unverschlüsselten Daten. Zugleich kann sichergestellt werden, dass das die mobilen Daten empfangende Computersystem, d.h. das anfragende Computersystem, dazu in der Lage ist, die entsprechenden Daten zu entschlüsseln.

Nach Ausführungsformen handelt es sich auch bei den geheimen kryptographischen Schlüsseln des die Datenbank verwaltenden Computersystems jeweils um indexindividuellen Schlüssel.

Nach Ausführungsformen sind die ersten Angaben ebenfalls jeweils unter Verwendung des zweiten kryptographischen Schlüssels verschlüsselt. Ausführungsformen können den Vorteil haben, dass das die Indexstruktur bereitstellende Computersystem, z. B. ein Server, keinen Zugriff auf die ersten Angaben in unverschlüsselter Form erhält.

Nach Ausführungsformen sind die zweiten Angaben ebenfalls jeweils unter Verwendung des dritten kryptographischen Schlüssels verschlüsselt. Ausführungsformen können den Vorteil haben, dass das die Indexstruktur bereitstellende Computersystem, z. B. ein Server, keinen Zugriff auf die zweiten Angaben in unverschlüsselter Form erhält.

Nach Ausführungsformen ermöglicht der erste Index Suchen danach, ob ein oder mehrere gesuchte Datenelemente in der Datenbank vorhanden sind. Die Suchanfrage identifiziert den ersten Index und definiert eine Suche nach einem Vorhandensein der ein oder mehreren Datenelemente in der Datenbank. Die Suchanfrage umfasst einen Berechtigungsnachweis, welcher eine Zugriffsberechtigung auf den ersten Index nachweist. Ferner geben die Suchergebnisse an, ob die gesuchten ein oder mehreren Datenelemente in der Datenbank vorhanden sind.

Ausführungsformen können den Vorteil haben, dass der erste Index es ermöglicht festzustellen, ob relevante Datenelemente in der Datenbank vorhanden sind.

Nach Ausführungsformen ermöglicht der zweite Index Suchen nach statistischen Merkmalen der in der Datenbank vorhandenen Datenelemente. Die Suchanfrage identifiziert den zweiten Index und definiert eine Anfrage nach ein oder mehreren statistischen Merkmalen ein oder mehreren gesuchter Datenelemente in der Datenbank. Die Suchanfrage umfasst einen Berechtigungsnachweis, welcher eine Zugriffsberechtigung auf den zweiten Index nachweist. Ferner geben die Suchergebnisse die angefragten statistischen Merkmale der ein oder mehreren gesuchter Datenelemente an.

Ausführungsformen können den Vorteil haben, dass der zweite Index es ermöglicht statistische Eigenschaften der in der Datenbank umfassten Datenelemente zu ermitteln.

Nach Ausführungsformen ermöglicht der dritte Index Suchen nach Identifikatoren von ein oder mehreren der Datensätze der Datenbank, welche ein oder mehrere gesuchte Datenelemente umfassen. Die Suchanfrage identifiziert den dritten Index und definiert eine Anfrage nach den Identifikatoren der Datensätze, welche die ein oder mehrere gesuchte Datenelemente umfassen. Die Suchanfrage umfasst einen Berechtigungsnachweis, welcher eine Zugriffsberechtigung auf den dritten Index nachweist. Ferner umfassen die Suchergebnisse die angefragten Identifikatoren. Die Identifikatoren ermöglichen es dem Empfänger der Suchergebnisse, eine Leseanfrage zum Auslesen der identifizierten Datensätze zu erzeugen und/oder zu adressieren.

Ausführungsformen können den Vorteil haben, dass Datensätze identifiziert werden können, welche relevante Datenelemente umfassen. Ein entsprechendes Identifizieren dieser Datensätze ermöglicht es, Leseanfragen zum Auslesen der entsprechenden Datensätze zu erstellen. Mithin kann eine Suche im dem dritten Index Voraussetzung für ein Lesen von Datensätzen der Datenbank sein.

Nach Ausführungsformen umfasst die erste Aufstellung die Datenelemente in einer ersten Reihenfolge, die zweite Aufstellung die Datenelemente in einer zweiten Reihenfolge und die dritte Aufstellung die Datenelemente in einer dritten Reihenfolge. Die zweite Reihenfolge ist relativ zu der ersten Reihenfolge permutiert und/oder die dritte Reihenfolge ist relativ zu der ersten und der zweiten Reihenfolge permutiert.

Ausführungsformen können den Vorteil haben, dass aufgrund der Permutation keine Rückschlüsse zwischen den einzelnen Indizes gezogen werden können. Ist beispielsweise einem Nutzer einer der indexindividuellen kryptografischen Schlüssel bekannt, so kann dieser von einem Datenelemente eine verschlüsselte Version erstellen und beispielsweise in dem entsprechenden Index die Position dieses Datenelementes bestimmen. Aus der Position des Datenelements kann er jedoch nicht auf die Position in einem der anderen Indizes schließen und somit beispielsweise bestimmen, wie die verschlüsselte Form desselben Datenelementes unter Verwendung eines der anderen indexindividuellen kryptografischen Schlüssel aussieht. Somit kann sichergestellt werden, dass die Kenntnis eines indexindividuellen kryptografischen Schlüssels dem Nutzer ausschließlich auf ein Erzeugen von Suchanfragen in dem zugehörigen Index beschränkt und in diesem keine Möglichkeit eröffnet wird, sinnvolle Suchanfragen für die anderen Indizes abzuleiten.

Nach Ausführungsformen ergibt sich aus den ersten Angaben ferner eine Anzahl an Datensätzen, welche die jeweiligen Datenelemente umfassen.

Nach Ausführungsformen ergibt sich aus den ersten Angaben ferner eine Anzahl an Datenelementen je Datensatz, welcher die jeweiligen Datenelemente umfasst.

Ausführungsformen können den Vorteil haben, dass anhand der ersten Angaben nicht nur eine absolute Häufigkeit eines Datenelements in der Datenbank ermittelt werden kann, sondern zudem auch Verteilungseigenschaften über die Datensätze der Datenbank ermittelt werden können. Beispielsweise kann bestimmt werden, in wie vielen Datensätzen das entsprechende Datenelement umfasst ist und/oder es können datensatzspezifische Häufigkeiten des Datenelements ermittelt werden. Beispielsweise können auch Durchschnittswerte für die Häufigkeit über die Datensätze der Datenbank ermittelt werden.

Nach Ausführungsformen ergibt sich aus den ersten Angaben ferner, ob Datenelemente von demselben Datensatz umfasst werden.

Ausführungsformen können den Vorteil haben, dass Suchen für Kombinationen aus Datenelementen ausgeführt werden können. Beispielsweise kann danach gesucht werden, wie häufig Kombinationen aus ein oder mehreren Datenelementen in einem gemeinsamen Datensatz auftreten. Ferner kann beispielsweise bestimmt werden, wie oft bestimmte Datenelemente in demselben Datensatz auftreten.

Nach Ausführungsformen geben die zweiten Angaben ferner jeweils die Speicherorte der identifizieren Datensätze an.

Ausführungsformen können den Vorteil haben, dass aus den zweiten Angaben ferner der Speicherort hervorgeht, an welchen Leseanfragen zum Lesen der identifizierten Datensätze zu senden sind.

Nach Ausführungsformen werden die Datensätze auf einem zweiten Server zum Abruf bereitgestellt.

Nach Ausführungsformen sind die Datensätze mit einem vierten kryptographischen Schlüssel verschlüsselt.

Nach Ausführungsformen handelt es sich bei den angegebenen Speicherorten um Speicherorte der entsprechenden Datensätze auf dem zweiten Server.

Ausführungsformen können den Vorteil haben, dass die Indexstruktur unabhängig von den Datensätzen der Datenbank bereitgestellt werden kann. Für einen Zugriff auf die entsprechenden Datensätze kann zunächst eine erfolgreiche Suche in der Indexstruktur, insbesondere in den dritten Indexstrukturen, notwendig sein. Ferner kann durch eine Verschlüsselung der Datensätze sichergestellt werden, dass die entsprechenden Datensätze beispielsweise nur von den dazu berechtigten Computersystemen, welche über die entsprechenden kryptografischen Schlüssel zur Entschlüsselung der Datensätze verfügen, gelesen werden können. Beispielsweise werden die entsprechenden kryptografischen Schlüssel in den auslesenden Computersystemen zusammen mit einer Leseberechtigung zur Verfügung gestellt.

Nach Ausführungsformen sind die Datensätze jeweils als eine Einheit verschlüsselt.

Ausführungsformen können den Vorteil haben, dass durch eine Verschlüsselung des gesamten Datensatzes im Gegensatz zu einer individuellen Verschlüsselung einzelner Datenelemente die Datenmenge reduziert werden kann und zudem eine sichere Verschlüsselung ermöglicht wird, da es aufgrund der Komplexität der verschlüsselten Datenstruktur, d.h. des Datensatzes, im Vergleich zu einem einzelnen Datenelement schwieriger ist, Rückschlüsse auf die verschlüsselten Daten zu ziehen.

Nach Ausführungsformen handelt es sich bei den angegebenen Speicherorten um Speicherorte der entsprechenden Datensätze für einen Zugriff über das die Datenbank verwaltende Computersystem.

Ausführungsformen können den Vorteil haben, dass die Datensätze zum Auslesen beispielsweise von dem die Datenbank verwaltenden Computersystem abgefragt werden können.

Nach Ausführungsformen ist zusätzlich zur Kenntnis des Speicherorts ein Nachweis einer Zugriffsberechtigung zum Auslesen der Datensätze notwendig.

Ausführungsformen können den Vorteil haben, dass eine explizite Zugriffsberechtigung zum Auslesen der Datensätze notwendig ist.

Nach Ausführungsformen ist zusätzlich ein Nachweis einer Zugriffsautorisierung durch eine unabhängige Kontrollinstanz zum Auslesen der Datensätze notwendig.

Ausführungsformen können den Vorteil haben, dass eine explizite Zugriffsautorisierung notwendig ist. Eine solche Zugriffsautorisierung kann beispielsweise von einem Zugriff auf Datensätze der Datenbank kontrollierenden Computersystem erteilt werden. Bei einem entsprechenden zugriffkontrollierenden Computersystem kann es sich beispielsweise um eine unabhängige Kontrollinstanz handeln, welche unabhängig von dem die Datenbank verwaltenden Computersystem ist. Beispielsweise muss zunächst eine Zugriffsautorisierung von der entsprechenden unabhängigen Kontrollinstanz angefragt werden, bevor ein Lesezugriff auf die entsprechenden Datensätze möglich ist.

Nach Ausführungsformen sind die als Suchbegriffe verwendeten Datenelemente der Suchanfrage jeweils unter Verwendung des kryptographischen Schlüssels des entsprechenden Index verschlüsselt.

Ausführungsformen können den Vorteil haben, dass aus den verwendeten Suchbegriffen keine Rückschlüsse auf den Inhalt der Datenbank gezogen werden können.

Nach Ausführungsformen werden die als Suchbegriffe verwendeten Datenelemente der empfangenen Suchanfrage zum Ausführen der Suche jeweils unter Verwendung des kryptographischen Schlüssels des entsprechenden Index verschlüsselt.

Ausführungsformen können den Vorteil haben, dass die Suchbegriffe im Zuge des Ausführens der Suche verschlüsselt werden. Dies kann beispielsweise von Vorteil sein im Falle eines Proxy-Re-Encryption-Verfahrens, bei welchem das die Indexstruktur bereitstellende Computersystem über den entsprechenden Re-Encryption-Schlüssel verfügt, sodass das entsprechende Computersystem die Suchbegriffe entsprechend umverschlüsseln kann.

Nach Ausführungsformen umfassen die Datenelemente jeweils individuelle Wörter in grammatikalischer Grundform und/oder Zahlenangaben. Ausführungsformen können den Vorteil haben, dass sichergestellt werden kann, dass die entsprechenden Datenelemente unabhängig von ihrer jeweiligen grammatikalischen Verwendung in den Datensätzen berücksichtigt und im Zuge der Suche aufgefunden werden können. Beispielsweise werden Verben im Infinite Präsenz, Substantive im Nominativ Singular und Adjektive im Nominativ Singular sowie im Maskulin, Feminin oder Neutrum umfasst.

Hierzu werden die Datensätze durch eine Tokenisierung unter Verwendung eines Tokenisierers auf ein elementares Niveau heruntergebrochen, welches die elementaren Bestandteile der Datensätze in Form der entsprechenden Token berücksichtigt. Ein "Tokenisierer" ist eine Programmlogik, die Daten, zum Beispiel einen Feldwert, als Input erhält, die Daten analysiert, z.B. um Delimiter oder andere Zerlegungskriterien und Muster zu erkennen, und die Daten dann in ein oder mehrere Token als Ergebnis der Analyse zerlegt und die Token zurückgibt. Es ist auch möglich, dass nicht alle Daten als Token zurückgegeben werden. Beispielsweise kann ein Volltextindizierer semantisch unbedeutende Stoppwörter erkennen und herausfiltern, sodass diese nicht indiziert werden. Alternativ werden alle Datenelemente als Token zurückgegeben. Einen Datensatz zu "tokenisieren" bedeutet also, den Datenwert nach einem bestimmten Schema in mehrere Bestandteile zu zerteilen. Die Bestandteile stellen die Token dar. So können z.B. natürlichsprachige Texte an vordefinierten Trennzeichen, z.B. Leerzeichen, Punkten oder Kommata, aufgeteilt werden, die so generierten Bestandteile (Wörter) werden als Token verwendet. Nach Ausführungsformen werden alle Token für die Indizierung verwendet. Es ist auch möglich, dass manche Token nicht für die Indizierung verwendet werden (z.B. Stoppwörter) oder die Token vor der Indizierung zusätzlich verarbeitet werden (z.B. Reduzierung von Wörtern auf den Wortstamm).

Nach Ausführungsformen wird die Datenbank im Zuge des Erzeugens der Indexstruktur in die fünfte oder sechste Normalform gebracht. Unter Verwendung der fünften oder sechsten Normalform wird die Indexstruktur erstellt. Ausführungsformen können den Vorteil haben, dass bei Verwendung der fünften oder sechsten Normalform eine redundanzfreie und vollständige Aufstellung sämtlicher Datenelemente in der Datenbank mit Angaben zu ihrem Vorkommen in den einzelnen Datensätzen der Datenbank bereitgestellt werden kann. Ausgehend von dieser fünften oder sechsten Normalform kann in effizienter und effektiver Weise die Indexstruktur erzeugt werden. Mithin wird die Indexstruktur unter Verwendung der fünften oder sechsten Normalform erzeugt.

Unter einer Normalisierung, insbesondere unter einer Normalisierung eines relationales Datenmodells, wird eine Aufteilung von Attributen in eine Mehrzahl von Relationen gemäß einer Normalisierungsregeln verstanden, sodass Redundanzen reduziert bzw. minimiert werden. Ein relationales Datenmodell lässt sich beispielsweise in tabellenartigen Datenstrukturen implementieren, in denen die Relationen in Form von Tabellen, die Attribute in Form von Tabellenspalten und die Tupel in Form von Tabellenzeilen realisiert sind.

Datenredundanzen haben die Gefahr, dass es bei Änderungen von Daten, welche mehrfach umfasst sind, zu Inkonsistenzen kommen kann und Anomalien auftreten. Ferner steigt durch Redundanzen unnötiger Weise der Speicherplatzbedarf. Durch eine Normalisierung können solche Redundanzen verringert bzw. minimiert werden. Ein relationales Datenmodell kann beispielsweise in eine Normalform gebracht werden, indem die Relationen des Datenschemas fortschreitend anhand der für die entsprechende Normalform geltenden funktionalen Abhängigkeiten in einfachere Relationen zerlegt.

Es können beispielsweise folgende Normalformen unterschieden werden: 1. Normalform (1NF), 2. Normalform (2NF), 3. Normalform (3NF), Boyce-Codd-Normalform (BCNF), 4. Normalform (4NF), 5. Normalform (5NF), 6. Normalform (6NF).

Die Normalisierungskriterien nehmen dabei von Normalform zu Normalform zu und umfassen jeweils die Normalisierungskriterien der vorhergehenden Normalformen, d.h. 1NF ⊆ 2NF ⊆ 3NF ⊆ BCNF ⊆ 4NF ⊆ 5NF ⊆ 6NF.

Eine Relation ist in der ersten Normalform, falls jedes Attribut der Relation einen atomaren Wertebereich besitzt und die Relation frei von Wiederholungsgruppen ist. Unter atomar wird hier ein Ausschluss von zusammengesetzten, mengenwertigen oder geschachtelten Wertebereichen für die Attribute, d.h. relationenwertigen Attributwertebereichen, verstanden. Eine Freiheit von Wiederholungsgruppen erfordert es, dass Attribute, die gleiche bzw. gleichartige Information enthalten, in unterschiedliche Relationen ausgelagert werden.

Eine Relation ist in der zweiten Normalform, wenn sie die Anforderungen der ersten Normalform erfüllt und kein Nichtprimärattribut funktional von einer echten Teilmenge eines Schlüsselkandidaten abhängt. Ein Nichtprimärattribut ist ein Attribut, welches nicht Teil eines Schlüsselkandidaten ist. Das bedeutet, dass jedes Nichtprimärattribut jeweils von allen ganzen Schlüsseln abhängig und nicht nur von einem Teil eines Schlüssels. Relationen in der ersten Normalform, deren Schlüsselkandidaten nicht zusammengesetzt sind, sondern aus jeweils einem einzelnen Attribut bestehen, erfüllen mithin automatisch die zweite Normalform. Unter einem Schlüsselkandidaten wird hierbei eine minimale Menge von Attributen verstanden, welche die Tupel einer Relation eindeutig identifiziert.

Eine Relation ist in der dritten Normalform, wenn sie die Anforderungen der zweiten Normalform erfüllt und kein Nichtschlüsselattribut von einem Schlüsselkandidaten transitiv abhängt. Ein Attribut ist von einem Schlüsselkandidaten transitiv abhängig, wenn das entsprechende Attribut von dem entsprechenden Schlüsselkandidaten über ein weiteres Attribut abhängig ist.

Eine Relation ist in der Boyce-Codd-Normalform, wenn sie die Anforderungen der dritten Normalform erfüllt und jede Determinante ein Superschlüssel ist. Unter einer Determinante wird hier eine Attributmenge verstanden, von welcher andere Attribute funktional abhängen sind. Eine Determinante beschreibt somit die Abhängigkeit zwischen Attributen einer Relation und legt fest, welche Attributmengen den Wert der übrigen Attribute bestimmen. Ein Superschlüssel ist eine Menge von Attributen in einer Relation, welche die Tupel in dieser Relation eindeutig identifizieren. Mithin umfassen die Attribute dieser Menge bei paarweise ausgewählten Tupeln immer unterschiedliche Werte. Schlüsselkandidat ist mithin eine minimale Teilmenge der Attribute eines Superschlüssels, welche die Identifizierung der Tupel ermöglicht.

Eine Relation ist in der vierten Normalform, wenn sie die Anforderungen der Boyce-Codd-Normalform erfüllt und keine nichttrivialen mehrwertigen Abhängigkeiten umfasst.

Eine Relation ist in der fünften Normalform, wenn sie die Anforderungen der vierten Normalform erfüllt und keine mehrwertigen Abhängigkeiten umfasst, die voneinander abhängig sind. Die fünfte Normalform liegt somit vor, falls jeder nichttriviale Verbund-Abhängigkeit durch die Schlüsselkandidaten impliziert ist. Eine Verbund-Abhängigkeit ist durch die Schlüsselkandidaten der Ausgangsrelation impliziert, wenn jede Relation der Menge von Relationen ein Superschlüssel der Ausgangsrelation ist.

Eine Relation ist in der sechsten Normalform, wenn sie die Anforderungen der fünften Normalform erfüllt und keine nichttrivialen Verbund-Abhängigkeiten umfasst.

Eine Relation genügt einer Verbund-Abhängigkeit (join dependency) von einer Mehrzahl von Relationen, falls sich die Relation als Ausgangsrelation verlustlos in die entsprechende Menge von Relationen zerlegen lässt. Die Verbund-Abhängigkeit ist trivial, falls eine der Relationen der Menge von Relationen alle Attribute der Ausgangsrelation aufweist.

Nach Ausführungsformen handelt es sich bei der Datenbank um eine Multi-Modell Datenbank mit einem Multi-Modell-Datenbankmanagementsystem, welches zum Speichern der Datensätze eine Mehrzahl von Datenmodellen verwendet. Beispielsweise werden zwei Datenmodelle verwendet. Die Datensätze werden in einem ersten dokumentenorientierten Datenmodellen gespeichert. Ein dokumentenorientiertes Datenmodell bedeutet, dass das Datenmodell keine strukturellen Vorgaben an die zu speichernden Daten stellt. Vielmehr werden die Daten in Dokumenten bzw. Datencontainern in der Form gespeichert, in der empfangen werden. In diesem Sinne handelt es sich bei den in dem dokumentenorientierten Datenmodell gespeicherten Daten um Rohdaten. Rohdaten bedeutet, dass die Daten in der Form abgespeichert werden, in der sie empfangen werden, ohne eine zusätzliche Datenverarbeitung durch das Datenbankmanagementsystem, insbesondere keine Umstrukturierung der Daten. Ausführungsformen können den Vorteil haben, dass somit der gesamte Informationsgehalt der empfangenen Daten (nahezu) vollständig beibehalten werden kann, ohne dass Vorannahmen des Datenbankmanagementsystems einfließen. Somit kann jederzeit auf die ursprünglichen Datenbestände zurückgreifen und diese in bei der weiteren Verarbeitung berücksichtigen. Basierend auf diesem Datenpool an Rohdaten, welchen das dokumentenbasierte Datenmodell bereitstellt, wird die Normalisierung der Daten ausgeführt und ein Index erzeugt. Bei diesem Index handelt es sich beispielsweise um eine inhaltsbasierte mehrstufige Indexstruktur. Dieser Index stellt ein zweites Datenmodellen dar, welches beispielsweise die sechste Normalform aufweist. So können alle Felder und Feldinhalte redundanzfrei von dem ersten Datenmodell in das normalisierte zweite Datenmodell übertragen werden, welches beispielsweise die Form eines mehrdimensionalen Schlüssel/Wert-Speichers (Key/Value-Store) bzw. einer mehrdimensionalen Key-Value-Datenbanken aufweist.

Beispielsweise werden zusätzlich Transaktionszeit und Gültigkeitszeit der Datensätze bitemporal gespeichert. Die Transaktionszeit gibt den Zeitpunkt an, zu dem eine Änderung eines Datenobjekt in der Datenbank erfolgt. Die Gültigkeitszeit gibt einen Zeitpunkt oder Zeitraum an, in dem ein Datenobjekt im modellierten Abbild der realen Welt den beschriebenen Zustand aufweist. Sind sowohl Gültigkeits- als auch Transaktionszeit relevant, spricht man von bitemporal. Zu jedem Datensatz wird mithin nicht nur der Zustand des Datensatzes bei der letzten Transaktion bzw. Änderung ersichtlich, sondern auch dessen Historie. In diesem Fall spricht man von bitemporaler Datenbank, bei welcher sowohl Gültigkeits- als auch Transaktionszeit der Datensätze berücksichtigt werden.

Ein Schlüssel-Werte-Datenmodell ermöglicht ein Speichern, Abrufen und Verwalten von assoziativen Datenfeldern. Dabei werden Werte (Value) über einen Schlüssel (Key) eindeutig identifiziert.

Nach Ausführungsformen erstellt ein die Datenbank verwaltendes Computersystem die Indexstruktur und führt die Verschlüsslungen unter Verwendung des ersten, zweiten und dritten kryptographischen Schlüssels aus. Das die Datenbank verwaltende Computersystem sendet die Indexstruktur an den ersten Server.

Ausführungsformen können den Vorteil haben, dass das die Datenbank verwaltende Computersystem die Indexstrukturen mit den verschlüsselten Datenelementen erstellt und einem Computersystem zum Ausführen der Suche bereitstellt, z. B. einen Server. Dabei erhält der Server die Indexstruktur ausschließlich mit den bereits verschlüsselten Datenelementen. Somit kann sichergestellt werden, dass der Server Zugang zu verschlüsselten Datenelementen gewährt bekommt.

Nach Ausführungsformen verschlüsselt das die Datenbank verwaltende Computersystem die einzelnen Datenelemente in den Datensätze der Datenbank und sendet diese zum Erstellen der Indexstruktur an den ersten Server.

Ausführungsformen können den Vorteil haben, dass die Verschlüsselung auf dem die Datenbank verwaltenden Computersystem erfolgen kann, während die Erzeugung der Indexstruktur in dem die Indexstruktur bereitstellenden Computersystem erfolgen kann. Nach Ausführungsformen müssen die Datenelemente der Datensätze hierzu zunächst in ihre grammatikalische Grundform gebracht werden.

Ausführungsformen können den Vorteil haben, dass die indexübergreifenden Verschlüsselungen durch das die Datenbank verwaltende Computersystem implementiert werden kann. Mithin kann sichergestellt werden, dass der Server Zugang zu den Datenelementen ausschließlich in verschlüsselter Form erhält. Eine indexindividuelle Verschlüsselung, durch welche Zugriffe auf die einzelnen Indizes beschränkt werden können, wird beispielsweise durch das die Indexstruktur verwaltende Computersystem erstellt.

Nach Ausführungsformen handelt es sich bei der Verschlüsselung durch das die Datenbank verwaltende Computersystem um eine Verschlüsselung mit einem indexübergreifenden kryptographischen Schlüssel. Ferner erfolgt eine indexindividuelle Verschlüsselung durch den ersten Server im Zuge des Erstellens der Indexstruktur.

Nach Ausführungsformen weist der Berechtigungsnachweis die Form einer hierarchischen Kettenstruktur aufweist, welche für jeden Nutzer der Indexstruktur, der eine Zugriffsberechtigung auf einen der Indizes besitzt, eine Erteilungskette umfasst, in welcher ausgehend von dem Ersteller des Datensatzes und/oder der Indexstruktur bis zu dem Nutzer mit der entsprechenden Zugriffsberechtigung eine Abfolge von Nutzer der Indexstruktur eingetragen ist. Innerhalb der Abfolge hat jeweils der vorangehende Nutzer dem nachfolgenden Nutzer die entsprechende Zugriffsberechtigung erteilt.

Ausführungsformen können den Vorteil haben, dass eine entsprechende Kettenstruktur es erlaubt, dass Zugriffsrechte auf die Indexstruktur eliminiert werden können. Somit kann beispielsweise ein Nutzer, welcher Zugang zu einem der Indizes hat, diesen Zugang auch einem anderen Nutzer gewähren. Nach Ausführungsformen ist eine Zugriffsautorisierung zum Zugriff auf die Datensätze und das Auslesen derselben nur durch eine indirekte Autorisierung der unabhängigen Kontrollinstanz zulässig. Die entsprechende Kontrollinstanz kann sich aber beispielsweise über eine Kettenstruktur authentisieren.

Nach Ausführungsformen umfasst die Berechtigungsstruktur eine Kette von Zertifikaten, welche jeweils ein oder mehrere Rechte bestätigen. Mithin handelt es sich beispielsweise um Berechtigungszertifikate. Jedes einem Wurzelzertifikat folgendes Zertifikat der hierarchischen Zertifikatskette ist jeweils von einem übergeordneten Zertifikat abgeleitet bzw. mit einem privaten kryptographischen Schlüssel eines dem übergeordneten Zertifikat zugeordneten asymmetrischen Schlüsselpaar signiert. Das Wurzelzertifikat ist beispielsweise ein Zertifikat des Erstellers des Datensatzes und/oder der Indexstruktur. Dabei kann ein abgeleitetes Zertifikat nur über Rechte verfügen, über welche auch das übergeordnete Zertifikat verfügt. Beispielsweise verfügt das Wurzelzertifikat über alle maximale Rechte, d.h. erste, zweite und dritte Berechtigungsstufe.

Nach Ausführungsformen umfasst die Berechtigungsstruktur eine Blockchain, beispielsweise eine unidirektional oder eine bidirektional verknüpfte Blockchain. Beispielsweise sind die Blöcke der Blockchain, welche einem Wurzelblock folgen, jeweils einem Nutzer zugeordnet sind und definieren, welche Rechte dem entsprechenden Nutzer erteilt wurden, dem der unmittelbar vorangehende Block der Blockchain zugeordnet ist. Nach Ausführungsformen erlaubt die Blockchain Verzweigungen, wenn einer der Nutzer mehreren Nutzern jeweils Rechte erteilt. Ein Block der Blockchain kann dabei einem Nutzer, welchem der entsprechende Block zugeordnet ist, nur solch Rechte erteilen, über welche auch der Nutzer verfügt, welchem der unmittelbar vorangehende Block zugeordnet ist.

Eine Blockchain stellt dabei eine erweiterbare Liste von Datensätzen bereit, welche in Blöcken angeordnet sind. Die Integrität der einzelnen Blöcke wird durch eine Verkettung mit ein oder mehreren Nachbarblöcken unter Verwendung einer kryptographischen Funktion, etwa einer Hashfunktion, gesichert. Dadurch, dass die Blöcke jeweils aus einer Anwendung der kryptographischen Funktion auf Dateninhalte der Nachbarblöcke und/oder des entsprechenden Blocks resultierende kryptografische Prüfwerte umfasst, ergibt sich eine Verkettung der Blöcke. Diese Verkettung kann beispielsweise unilateral oder bilateral sein. Somit ist es schwer, eine solche Blockchain nachträglich zu manipulieren, da hierzu nicht nur ein einzelner Block manipuliert werden müsste, sondern alle mit diesem verketten Blöcke, deren Prüfwerte von dem Dateninhalte des entsprechenden einzelnen Blocks abhängen. Wird der zu manipulierende Block tatsächlich manipuliert, so ändert sich sein Prüfwert. Dieser geänderte Prüfwert passt nicht mehr zu den Prüfwerten der Nachbarblöcke, wodurch die Manipulation erkennbar wird und bei einer Prüfung mittels der Prüfwerte auffällt.

Ausführungsformen umfassen ferner einen Server für eine verschlüsselte Suche in einer Datenbank. Der Server umfasst einen Prozessor, einen Speicher mit ausführbaren Programminstruktionen und eine Kommunikationsschnittstelle zur Kommunikation über ein Netzwerk. In dem Speicher ist ferner eine durchsuchbare, verschlüsselte Indexstruktur der Datenbank gespeichert.

Die Indexstruktur umfasst einen ersten Index, welcher eine erste Aufstellung der von den Datensätzen der Datenbank umfassten Datenelemente umfasst. Die Datenelemente des ersten Index sind jeweils unter Verwendung eines ersten kryptographischen Schlüssels verschlüsselt. Die Indexstruktur umfasst ferner einen zweiten Index, welcher eine zweite Aufstellung der von den Datensätzen der Datenbank umfassten Datenelemente umfasst. Die Datenelemente des zweiten Index sind jeweils unter Verwendung eines zweiten kryptographischen Schlüssels verschlüsselt. Den Datenelementen in dem zweiten Index sind jeweils erste Angaben zugeordnet, aus welchen sich eine Häufigkeit des Auftretens der entsprechenden Datenelemente in der Datenbank ergibt. Die Indexstruktur umfasst ferner einen dritten Index, welcher eine dritte Aufstellung der von den Datensätzen der Datenbank umfassten Datenelemente umfasst. Die Datenelemente des dritten Index sind jeweils unter Verwendung eines dritten kryptographischen Schlüssels verschlüsselt. Den Datenelementen in dem dritten Index sind jeweils zweite Angaben zugeordnet, welche jeweils in adressierbarerer Weise die Datensätze identifizieren in denen die Datenelemente jeweils gespeichert sind. Ein Zugriff auf jeden der Indizes setzt jeweils einen Nachweis einer indexindividuellen Zugriffsberechtigung voraus.

Der Prozessor ist dazu konfiguriert, auf ein Ausführen der Programminstruktionen den Server zum Ausführen eines Verfahrens zu steuern, welches umfasst:
- Empfangen einer Suchanfrage, wobei die Suchanfrage einen oder mehrere der Indizes identifiziert, auf welchen jeweils eine Suche ausgeführt werden soll, wobei die Suchanfrage für jeden der identifizierten Indizes jeweils ein oder mehrere Datenelemente als Suchbegriffe umfasst, wobei die Suchanfrage für jeden der identifizierten Indizes jeweils einen Berechtigungsnachweis umfasst,
- Prüfen der Berechtigungsnachweise für die identifizierten Indizes,
- Ausführen der Suchen auf den identifizierten Indizes, für welche jeweils ein gültiger Berechtigungsnachweis vorliegt,
- Senden der Suchergebnisse in Antwort auf die Suchanfrage.

Nach Ausführungsformen ist der Server dazu konfiguriert jede der zuvor beschriebenen Ausführungsformen des Verfahrens zum verschlüsselten Suchen in einer Datenbank auszuführen.

Ausführungsformen umfassen ferner ein verteiltes System umfassend einen Server nach einer der zuvor beschriebenen Ausführungsformen und ein die Datenbank verwaltendes Computersystem.

Nach Ausführungsformen ist das verteilte System dazu konfiguriert jede der zuvor beschriebenen Ausführungsformen des Verfahrens zum verschlüsselten Suchen in einer Datenbank auszuführen.

Nach Ausführungsformen umfasst das verteilte System ferner einen weiteren Server. Der weitere Server umfasst einen weiteren Prozessor, einen weiteren Speicher mit weiteren ausführbaren Programminstruktionen und eine weitere Kommunikationsschnittstelle zur Kommunikation über ein Netzwerk. In dem weiteren Speicher sind ferner die Datensätze der Datenbank in verschlüsselter Form gespeichert und werden von dem weiteren Server zum Abrufen über das Netzwerk bereitgestellt.

Nach Ausführungsformen umfasst das verteilte System ferner das anfragende Computersystem.

Im Weiteren werden Ausführungsformen der Erfindung mit Bezugnahme auf die Zeichnungen näher erläutert. Es zeigen:
- Figur 1: ein schematisches Diagramm einer exemplarischen verschlüsselten Indexstruktur,
- Figur 2: ein schematisches Diagramm einer exemplarischen verschlüsselten Indexstruktur,
- Figur 3: ein Flussdiagramm eines exemplarischen Verfahrens zum Erstellen einer exemplarischen Indexstruktur,
- Figur 4: ein schematisches Diagramm datensatzweise verschlüsselter Datensätze,
- Figur 5: ein schematisches Diagramm datenelementweise verschlüsselter Datensätze,
- Figuren 6: schematische Diagramme datenelementweise verschlüsselter Datensätze,
- Figur 7: ein schematisches Diagramm eines exemplarischen Systems für eine verschlüsselte Suche in einer Datenbank,
- Figur 8: ein schematisches Diagramm eines exemplarischen Systems für eine verschlüsselte Suche in einer Datenbank,
- Figur 9: ein Flussdiagramm eines exemplarischen Verfahrens zum verschlüsselten Suchen in einer Datenbank,
- Figur 10: ein Flussdiagramm eines exemplarischen Verfahrens zum verschlüsselten Suchen in einer Datenbank,
- Figur 11: ein Flussdiagramm eines exemplarischen Verfahrens zum Lesen von Datensätzen der Datenbank,
- Figur 12: ein Flussdiagramm eines exemplarischen Verfahrens zum Erstellen verschlüsselter Indizes und
- Figur 13: ein Flussdiagramm eines exemplarischen Verfahrens zum Erstellen verschlüsselter Indizes.

Elemente der nachfolgenden Ausführungsformen, die einander entsprechen, werden mit denselben Bezugszeichen gekennzeichnet.

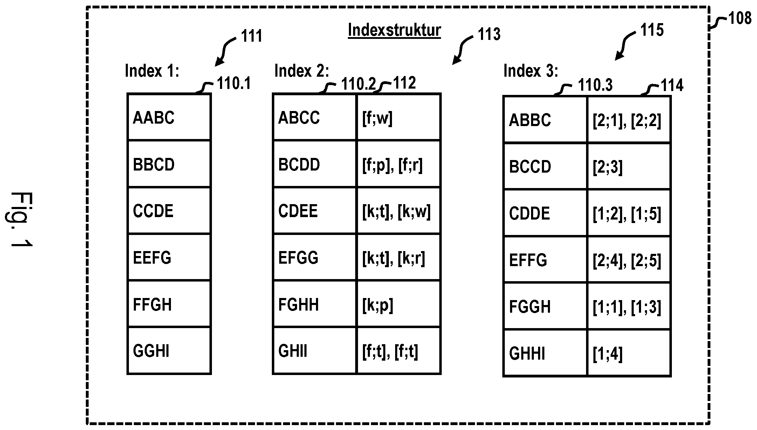

Figur 1 zeigt eine exemplarische verschlüsselte Indexstruktur 108. Die Indexstruktur 108 umfasst einen ersten Index 111, welcher eine erste Aufstellung 110.1 der von den Datensätzen der Datenbank umfassten Datenelemente umfasst. Die Datenelemente des ersten Index 108 sind beispielsweis jeweils unter Verwendung eines ersten kryptographischen Schlüssels verschlüsselt. Beispielsweise umfasst die Indexstruktur 108 ferner einen zweiten Index 113, welcher eine zweite Aufstellung 110.2 der von den Datensätzen der Datenbank umfassten Datenelemente umfasst. Die Datenelemente des zweiten Index 113 sind beispielsweise jeweils unter Verwendung eines zweiten kryptographischen Schlüssels verschlüsselt. Den Datenelementen in dem zweiten Index 113 sind beispielsweise jeweils erste Angaben 112 zugeordnet sind, aus welchen sich eine Häufigkeit des Auftretens der entsprechenden Datenelemente in der Datenbank ergibt. Ferner können die ersten Angaben 112 auch die Häufigkeit des Auftretens der jeweiligen Datenelemente je Datensatz und/oder die Position des entsprechenden Datenelements innerhalb des Datensatzes angeben. Beispielsweise ist die Datenbank tabellarisch strukturiert mit Spalten und Zeilen. Bei einem einzelnen Datensatz kann es sich beispielsweise um eine Zeile oder eine Spalte der entsprechenden Tabelle handeln. Beispielsweise geben die ersten Angaben 112 jeweils an, in welcher Spalte x und Zeile y das entsprechende Datenelement auftritt, d.h. [x;y]. Hierbei kann die Angabe der Spalte x und Zeile y beispielsweise anonymisiert sein, d.h. anstelle einer Zahl kann ein Platzhalter verwendet werden, oder die Angabe der Spalte x und Zeile y kann gegenüber der tatsächlichen Spalte und Zeile der Datenbank permutiert sein. Beispielsweise umfasst die Indexstruktur 108 ferner einen dritten Index 115, welcher eine dritte Aufstellung 110.3 der von den Datensätzen der Datenbank umfassten Datenelemente umfasst. Die Datenelemente des dritten Index 115 sind beispielsweise jeweils unter Verwendung eines dritten kryptographischen Schlüssels verschlüsselt. Den Datenelementen in dem dritten Index 115 sind beispielsweise jeweils zweite Angaben 114 zugeordnet sind, welche beispielsweise jeweils in adressierbarerer Weise die Datensätze identifizieren, in denen die Datenelemente jeweils gespeichert sind. Beispielsweise geben die zweiten Angaben 114 im Falle einer tabellarisch strukturierten Datenbank jeweils an, in welcher Spalte x und Zeile y das entsprechende Datenelement auftritt, d.h. [x;y]. Beispielsweise umfassen die zweiten Datensätze 114 jeweils eine URL, unter welcher Datensätze der Datenbank abgerufen werden können, einen Identifikator der Datenbank ID_{Ds}, welcher die Datenbank eindeutig identifiziert, und/oder einen Identifikator des Datensatzes ID_{DS}, welcher den Datensatz, der das Datenelement umfasst, eindeutig identifiziert. Bei dem Identifikator des Datensatzes ID_{DS} kann es sich beispielsweise um eine Zeilen- oder Spaltenangabe handeln, insbesondere um eine Angabe der tatsächlichen Zeile oder Spalte, falls die ersten Angaben 112 anonymisiert oder permutiert sind. Die erste Aufstellung 110.1 umfasst die Datenelemente beispielsweise in einer ersten Reihenfolge, die zweite Aufstellung 110.2 umfasst die Datenelemente in einer zweiten Reihenfolge und die dritte Aufstellung 110.3 umfasst die Datenelemente in einer dritten Reihenfolge. Die zweite Reihenfolge ist beispielsweise relativ zu der ersten Reihenfolge permutiert und die dritte Reihenfolge relativ zu der ersten und der zweiten Reihenfolge. Beispielsweise ist keine der Reihenfolgen der drei Aufstellungen 110.1, 110.2, 110.3 mit einer ursprünglichen, beispielsweise alphabetischen, Aufstellung der Datenelemente identisch. Beispielsweise ist eine der drei Reihenfolgen mit der ursprünglichen Aufstellung der Datenelemente identisch. Im Falle der in Figur 1 gezeigten Ausführungsform der Indexstruktur 108 sind die ersten Angaben 112 und die zweiten Angaben 114 beispielsweise nicht verschlüsselt.

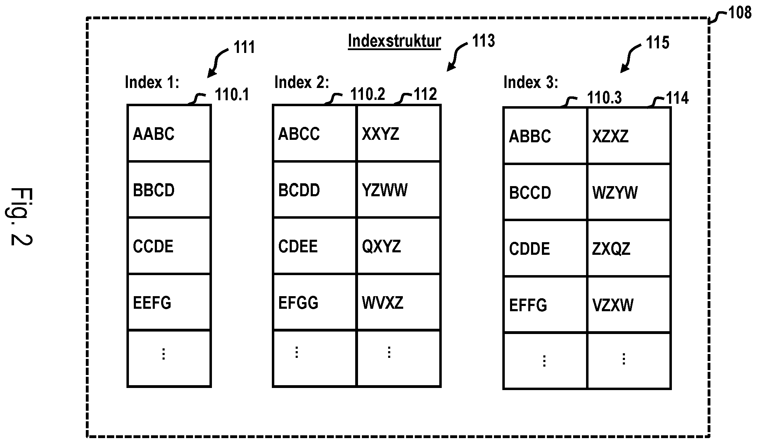

Figur 2 zeigt eine weitere exemplarische verschlüsselte Indexstruktur 108, welche der in Figur 1 gezeigten Indexstruktur 108 entspricht. Im Gegensatz zu der Indexstruktur 108 der Figur 1 sind im Falle der Indexstruktur 108 der Figur 2 beispielsweise auch die ersten Angaben 112 und die zweiten Angaben 114 verschlüsselt. Die ersten Angaben 112 sind beispielsweise mit dem zweiten kryptographischen Schlüssel verschlüsselt und die zweiten Angaben 114 sind beispielsweise mit dem dritten kryptographischen Schlüssel verschlüsselt.

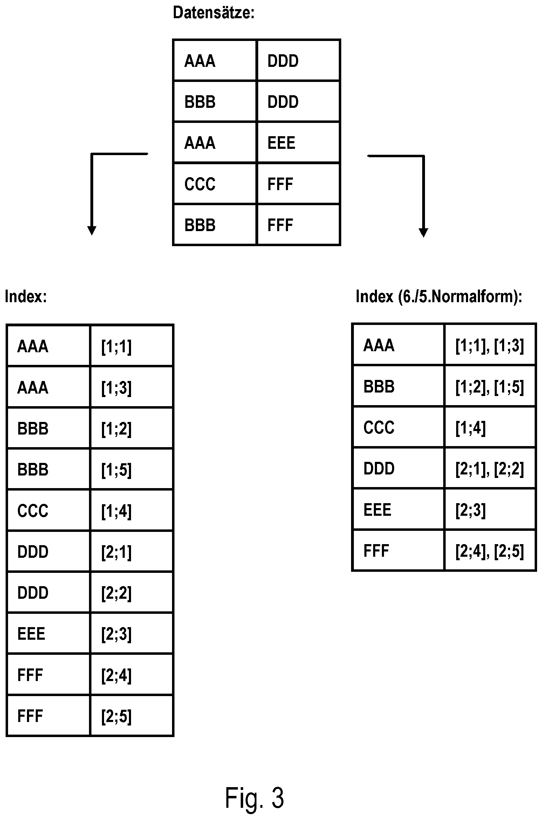

Figur 3 zeigt ein exemplarisches Verfahren zum Erstellen eines exemplarischen Index. Zunächst wird eine Datenbank mit Datensätzen bereitgestellt. Die Datenbank ist beispielsweise tabellarisch strukturiert mit Spalten und Zeilen, wobei die einzelnen Zeilen jeweils einen Datensatz bilden. Beispielsweise können auch die einzelnen Spalten jeweils einen Datensatz bilden. Wird für diese Datenbank ein Index gebildet, umfasst dieser beispielsweise alle Datenelemente der Datensätze und gibt jeweils an, wo diese Datenelemente in der Datenbank und/oder in den Datensätzen auftreten. Beispielsweise geben die entsprechenden Angaben jeweils an, in welcher Spalte x und Zeile y das entsprechende Datenelement auftritt, d.h. [x;y]. Fall ein solcher Index einen eigenständigen Eintrag für jedes Vorkommen eines Datenelements in den Datensätzen umfasst, vergleiche Index links in Figur 3, besteht die Gefahr, dass der Indes sehr lange wird. Dies führt zu längeren Suchzeiten und größerem Speicherbedarf. Kompakter ist ein Index, welcher beispielsweise auf der fünften oder sechsten Normalform der Datenbank beruht, vergleiche Index rechts in Figur 3. In diesem Fall umfasst der Index für jedes Datenelement beispielsweise nur einen einzigen Eintrag, welcher alle Stellen auflistet, an denen das entsprechende Datenelement in der Datenbank und/oder den Datensätzen vorkommt. Somit können schnellere Suchen ermöglicht werden und der Speicherbedarf zum Speichern des Index kann reduziert werden.

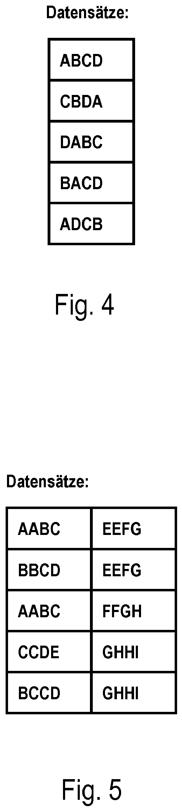

Figur 4 zeigt exemplarische datensatzweise verschlüsselte Datensätze. Bei den in Figur 4 gezeigten Datensätzen handelt es sich beispielsweise um die in Figur 3 oben gezeigten Datensätze in verschlüsselter Form. Die in Figur 3 oben gezeigte Datenbank ist beispielsweise tabellarisch strukturiert mit Spalten und Zeilen, wobei die einzelnen Zeilen jeweils einen Datensatz bilden. Diese Datensätze bzw. Zeilen sind in der Datenbank der Figur 4 in verschlüsselter Form umfasst, wobei jeder der verschlüsselten Einträge jeweils einem Datensatz bzw. einer Zeile der Figur 3 entspricht.

Figur 5 zeigt exemplarische datenelementweise verschlüsselte Datensätze. Bei der in Figur 4 gezeigten Tabelle handelt es sich beispielsweise um die in Figur 3 gezeigte Tabelle, wobei jeder Eintrag, d.h. die einzelnen Datenelemente, jeweils individuelle verschlüsselt sind. Somit kann eine verschlüsselte Datenbank bereitgestellt werden, in welcher die einzelnen Datenelemente jeweils verschlüsselt sind. Dies ermöglicht beispielsweise ein Bilden eines verschlüsselten Index in analoger Weise zu dem in Figur 3 gezeigten Verfahren, wobei die Datenelemente in verschlüsselter Form zur Indexbildung verwendet werden.

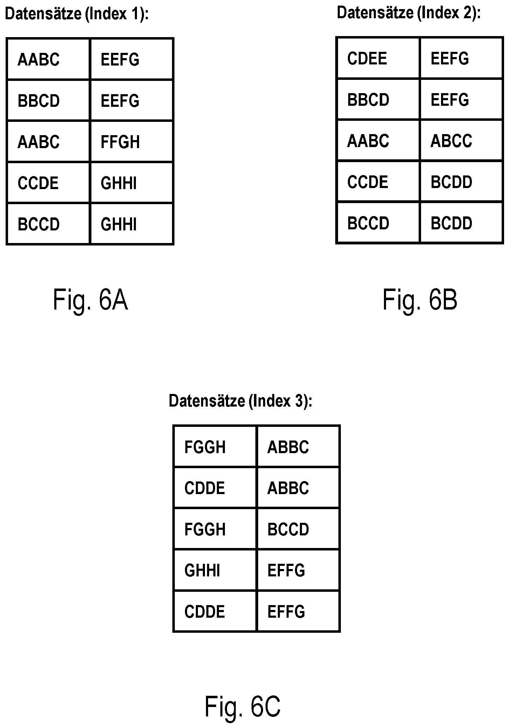

Figuren 6 zeigen exemplarische datenelementweise verschlüsselte Datensätze. Bei den in den Figuren 6A bis 6B gezeigten Tabellen handelt es sich beispielsweise jeweils um die in Figur 3 gezeigte Tabelle, wobei jeder Eintrag, d.h. die einzelnen Datenelemente, jeweils einzeln mit einem tabellenindividuellen kryptographischen Schlüssel verschlüsselt sind. Somit könne beispielsweise drei Datensätze zum Bilden dreier Indizes, d.h. Index 1 bis Index 3, bereitgestellt werden. Da für jede der Tabellen jeweils ein anderer kryptographischer Schlüssel zum Verschlüsseln verwendet wird, sind auch die resultierenden Indizes bzw. deren Einträge jeweils mit einem kryptographischen Schlüssel verschlüsselt. Zum Bilden der entsprechenden verschlüsselten Indizes kann beispielsweise in analoger Weise zu dem in Figur 3 gezeigten Verfahren vorgegangen werden, wobei die Datenelemente in verschlüsselter Form zur Indexbildung verwendet werden.

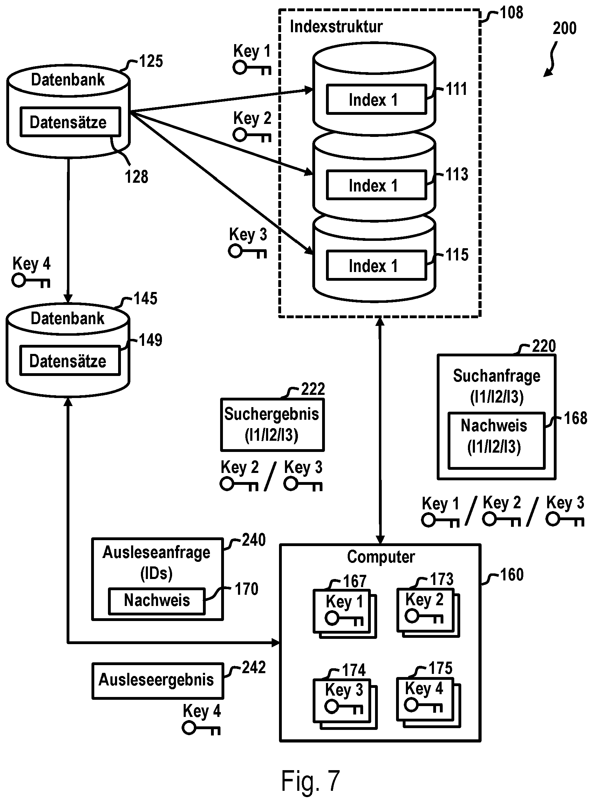

Figur 7 zeigt ein exemplarisches System 200 für eine verschlüsselte Suche in einer Datenbank 125 unter Verwendung einer Indexstruktur 108. Die Datenbank 125 umfasst beispielsweise eine Mehrzahl von Datensätzen 128 mit jeweils ein oder mehreren Datenelementen. Diese Datenbank 125 wird beispielsweise von einem Datenbankcomputersystem verwaltet. Unter Verwendung der Datenbank 125 wird eine Indexstruktur 108 der Datenbank 125 erstellt. Diese Indexstruktur 108 umfasst beispielsweise drei Indizes 111, 113, 115. Der ersten Index 111 umfasst beispielsweise eine erste Aufstellung der von den Datensätzen 128 der Datenbank 125 umfassten Datenelemente. Die Datenelemente des ersten Index 111 sind beispielsweis jeweils unter Verwendung eines ersten kryptographischen Schlüssels Key 1 verschlüsselt. Der zweite Index 113 umfasst beispielsweise eine zweite Aufstellung der von den Datensätzen 128 der Datenbank 125 umfassten Datenelemente. Die Datenelemente des zweiten Index 113 sind beispielsweise jeweils unter Verwendung eines zweiten kryptographischen Schlüssels Key 2 verschlüsselt. Den Datenelementen in dem zweiten Index 112 sind beispielsweise ferner jeweils erste Angaben zugeordnet sind, aus welchen sich eine Häufigkeit des Auftretens der entsprechenden Datenelemente in der Datenbank 125 ergibt. Der dritte Index 115 umfasst beispielsweise eine dritte Aufstellung der von den Datensätzen 128 der Datenbank 125 umfassten Datenelemente. Die Datenelemente des dritten Index sind beispielsweise jeweils unter Verwendung eines dritten kryptographischen Schlüssels Key 3 verschlüsselt. Den Datenelementen in dem dritten Index 115 sind beispielsweise ferner jeweils zweite Angaben zugeordnet sind, welche beispielsweise jeweils in adressierbarerer Weise die Datensätze identifizieren, in denen die Datenelemente jeweils gespeichert sind. Beispielsweise identifizieren die zweiten Angaben die Datensätze 128. Beispielsweise identifizieren die zweiten Angaben die verschlüsselten Datensätze 149 einer verschlüsselten Kopie der Datenbank 125, d.h. der Datenbank 145. Die Datensätze 149 sind beispielsweise Kopien der Datensätze 128, welche mit einem vierten kryptographischen Schlüssels Key 4 verschlüsselt sind. Beispielsweise setzt ein Zugriff auf jeden der Indizes 111, 113, 115 jeweils einen Nachweis einer indexindividuellen Zugriffsberechtigung voraussetzt. Beispielsweise sind die ersten Angaben ebenfalls jeweils unter Verwendung des zweiten kryptographischen Schlüssels Key 2 verschlüsselt und/oder die zweiten Angaben ebenfalls jeweils unter Verwendung des dritten kryptographischen Schlüssels Key 3 verschlüsselt. Nach alternativen Ausführungsformen sind die ersten und/oder zweiten Angaben jeweils unverschlüsselt. Die Indexstruktur 108 wird beispielsweise von einem Indexserver für Suchen bereitgestellt. Beispielsweise werden die Datensätze 149 zum Abrufen, etwa auf einem Datenbankserver, bereitgestellt. Ein Computersystem 160 kann die Indexstruktur 108 verwenden für Suchen in der Datenbank 125 und so beispielsweise relevante Datensätze der Datenbank 125 identifizieren und diese in Form der verschlüsselten Datensätze 149 abrufen. Hierfür verfügt das Computersystem 160 über entsprechende Berechtigungsnachweise. Ferner verfügt das Computersystem 160 über kryptographische Schlüssel 167, 173, 174, 175. Die kryptographischen Schlüssel 167 kann das Computersystem 160 beispielsweise zum Erstellen verschlüsselter Suchbegriffe für Suchen in dem ersten Index 111 verwenden. Beispielsweise umfassen die kryptographischen Schlüssel 167 den ersten kryptographischen Schlüssel Key 1, etwa einen öffentlichen kryptographischen Schlüssel. Die kryptographischen Schlüssel 173 kann das Computersystem 160 beispielsweise zum Erstellen verschlüsselter Suchbegriffe für Suchen in dem zweiten Index 113 verwenden. Beispielsweise umfassen die kryptographischen Schlüssel 173 den zweiten kryptographischen Schlüssel Key 2, etwa einen öffentlichen kryptographischen Schlüssel. Ferner umfassen die kryptographischen Schlüssel 173 beispielsweise einen kryptographischen Schlüssel zum Entschlüsseln verschlüsselter Suchergebnisse, etwa mit dem zweiten kryptographischen Schlüssel Key 2 verschlüsselter erster Angaben. Die kryptographischen Schlüssel 174 kann das Computersystem 160 beispielsweise zum Erstellen verschlüsselter Suchbegriffe für Suchen in dem dritten Index 115 verwenden. Beispielsweise umfassen die kryptographischen Schlüssel 174 den dritten kryptographischen Schlüssel Key 3, etwa einen öffentlichen kryptographischen Schlüssel. Ferner umfassen die kryptographischen Schlüssel 174 beispielsweise einen kryptographischen Schlüssel zum Entschlüsseln verschlüsselter Suchergebnisse, etwa mit dem dritten kryptographischen Schlüssel Key 3 verschlüsselter zweiter Angaben. Schließlich umfasst das Computersystem 160 beispielsweise kryptographische Schlüssel 175 mit einem kryptographischen Schlüssel zum Entschlüsseln der mit dem vierten kryptographischen Schlüssel Key 4 verschlüsselten Datensätzen 149.

Das Computersystem 160 erstellt beispielsweise eine Suchanfrage 220 für eine Suche in einem oder mehreren der Indizes 111, 113, 115 der Indexstruktur 108 und sendet diese an ein die Indexstruktur 108 verwaltendes Computersystem. Die Suchanfrage 220 umfasst beispielsweise einen Berechtigungsnachweis 168 des Computersystems 160 für Suchen auf ein oder mehreren der Indizes 111, 113, 115 der Indexstruktur 108. Die Suchanfrage umfasst ferner Suchbegriffe in Form von Datenelementen, welche mit einem der kryptographischen Schlüssel Key 1, Key 2, Key 3 verschlüsselt sind in Abhängigkeit davon, auf welchem der Indizes 111, 113, 115 die Suche ausgeführt werden soll. Ist die angefragte Suche auf der Indexstruktur ausgeführt, werden die Suchergebnisse 222 in Antwort auf die Suchanfrage 220 an das Computersystem 160 gesendet. Die Ausleseergebnisse 222 sind beispielsweise mit dem zweiten oder dritten kryptographischen Schlüssel Key 2, Key 3 verschlüsselt, welche das Computersystem 160 beispielsweise unter Verwendung der kryptographischen Schlüssel 173, 174 entschlüsseln kann.

Beispielsweise erfolgt zunächst eine erste Suche in Index 111 danach, ob bestimmte Datenelement in der Datenbank 125 enthalten sind. Die entsprechende Suche beschränkt sich beispielsweise auf den ersten Index 111. Umfasst die Datenbank 125 relevante Begriffe, erfolgt beispielsweise eine zweite Suche unter Verwendung des zweiten Index 113 in den ersten Angaben, danach in welchem Umfang die Datenbank 125 die relevanten Begriffe als Datenelemente umfasst. Beispielsweise kann die zweite Suche auch ermitteln, ob die Datenbank 125 die relevanten Begriffe in Kombination miteinander umfasst, d.h. als Datenelemente in demselben Datensatz umfasst. Beispielsweise kann die zweite Suche auch ermitteln, wie oft die Datenbank 125 und/oder in wie vielen Datensätze 128 die Datenbank 125 die relevanten Begriffe in Kombination miteinander umfasst. Beispielsweise kann anstelle der ersten Suche auch direkt die zweite Suche ausgeführt werden. Schließlich wird nach der ersten oder zweiten Suche beispielsweise eine dritte Suche unter Verwendung des dritten Index 115 ausgeführt, welche als Suchergebnis den Suchbegriffen bzw. den entsprechen Datenelementen zugeordnete zweite Angaben umfasst, welche die Datensätze 128 der Datenbank 125 bzw. die verschlüsselten Datensätze 149 der Datenbank 145 identifizieren, in denen die jeweiligen Datenelemente gespeichert sind. Beispielsweise kann anstelle der ersten und/oder zweiten Suche auch direkt die dritte Suche ausgeführt werden. Allerdings kann ein vorheriges Ausführen der zweiten Suche helfen die dritte Suche besser einzuschränken auf solche Datensätze, welche die Suchbegriffe tatsächlich in einem relevanten Kontext, d.h. in einer relevanten Kombination, und/oder in einer relevanten Anzahl umfassen. Beispielsweise ist eine Kenntnis der entsprechenden zweiten Angaben und mithin ein erfolgreiches Ausführen einer entsprechenden dritten Suche Voraussetzung für ein Auslesen von Datensätzen 149 aus der Datenbank 145.

Unter Verwendung der mittels einer entsprechenden Suche ermittelten zweiten Angaben sowie eines weiteren Berechtigungsnachweises 170 erzeugt das Computersystem 160 beispielsweise eine Ausleseanfrage 240 nach auszulesenden Datensätzen 149. Der Berechtigungsnachweises 170 weist beispielsweise für das Computersystem 160 eine Zugriffsberechtigung bzw. eine Leseberechtigung zum Abrufen bzw. Auslesen der entsprechende Datensätze 149 nach. In Antwort auf ein Senden der Ausleseanfrage 240 empfängt das Computersystem 160 beispielsweise ein Ausleseergebnis 242, welches alle auszulesenden Datensätze 149 der Datenbank 145 umfasst, welche das Computersystem 160 korrekt identifizieren und/oder adressieren kann und für welche es erfolgreich eine Ausleseberechtigung unter Verwendung des Berechtigungsnachweises 170 nachweisen kann. Die Ausleseergebnisse 242 sind beispielsweise mit dem vierten kryptographischen Schlüssel Key 4 verschlüsselt, welche das Computersystem 160 beispielsweise unter Verwendung der kryptographischen Schlüssel 175 entschlüsseln kann.

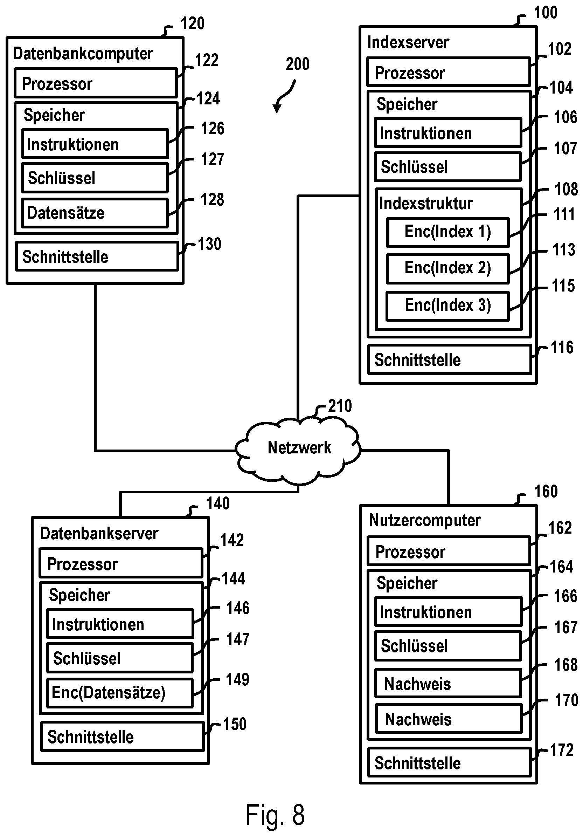

Figur 8 zeigt ein exemplarisches System 200 für eine verschlüsselte Suche in einer Datenbank mit Datensätzen 128 unter Verwendung einer Indexstruktur 108. Die Datenbank umfasst beispielsweise eine Mehrzahl von Datensätze 128 und wird von einem Datenbankcomputersystem 120 verwaltet. Dieses Datenbankcomputersystem 120 umfasst beispielsweise einen Prozessor 122, einen Speicher 124 mit Programminstruktionen 126 und eine Kommunikationsschnittstelle 130 zur Kommunikation über das Netzwerk 210. Bei dem Netzwerk 210 handelt es sich beispielsweise um ein öffentliches Netzwerk, wie etwa das Internet, oder ein privates Netzwerk. Bei einem Ausführen der Programminstruktionen 126 durch den Prozessor 122 steuert der Prozessor 122 die Verwaltung der Datenbank, insbesondere derer Datensätze 128, durch das Datenbankcomputersystem 120. Die Verwaltung der Datensätze 128 umfasst beispielsweise ein Bereitstellen derselben für einen Indexserver 100, welcher eine verschlüsselte Indexstruktur 108 der Datenelemente der Datensätze 128 für Suchen über das Netzwerk 210 bereitstellt. Beispielsweise wird die entsprechende Indexstruktur 108 durch das Datenbankcomputersystem 120 erstellt und dem Indexserver 100 zur Verfügung gestellt oder die Datensätze 128 werden beispielsweise dem Indexserver 100 verschlüsselt zur Verfügung gestellt, welcher diese zum Erstellen der verschlüsselten Indexstruktur 108 verwendet. Die Verwaltung der Datensätze 128 umfasst ferner beispielsweise ein Bereitstellen derselben in verschlüsselter Form 149 für einen Datenbankserver 400, welcher die verschlüsselten Datensätze 149 zum Abruf über das Netzwerk 210 bereitstellt. Beispielsweise verfügt das Datenbankcomputersystem 120 über kryptographische Schlüssel 127 zum Verschlüsseln von Datenelementen der Datensätze 128 zum Erstellen der verschlüsselten Indexstruktur 108 und/oder zum Verschlüsseln der Datensätze 128 zum Bereitstellen der verschlüsselten Datensätze 149.

Der Indexserver 100 umfasst beispielsweise einen Prozessor 102, einen Speicher 104 mit Programminstruktionen 106 und eine Kommunikationsschnittstelle 116 zur Kommunikation über das Netzwerk 210. Ferner ist in dem Speicher 104 beispielsweise eine Indexstruktur 108 der von dem Datenbankcomputersystem 120 verwalteten Datensätzen 128 bzw. der Datenbank, gespeichert. Die verschlüsselte Indexstruktur 108 umfasst beispielsweise drei verschlüsselte Indizes 111, 113, 115. Der ersten Index 111 umfasst beispielsweise eine erste Aufstellung der von den Datensätzen 128 der Datenbank 125 umfassten Datenelemente.

Die Datenelemente des ersten Index 111 sind beispielsweis jeweils unter Verwendung eines ersten kryptographischen Schlüssels verschlüsselt. Der zweite Index 113 umfasst beispielsweise eine zweite Aufstellung der von den Datensätzen 128 der Datenbank 125 umfassten Datenelemente. Die Datenelemente des zweiten Index 113 sind beispielsweise jeweils unter Verwendung eines zweiten kryptographischen Schlüssels verschlüsselt. Den Datenelementen in dem zweiten Index 112 sind beispielsweise ferner jeweils erste Angaben zugeordnet sind, aus welchen sich eine Häufigkeit des Auftretens der entsprechenden Datenelemente in der Datenbank 125 ergibt. Der dritte Index 115 umfasst beispielsweise eine dritte Aufstellung der von den Datensätzen 128 der Datenbank 125 umfassten Datenelemente. Die Datenelemente des dritten Index sind beispielsweise jeweils unter Verwendung eines dritten kryptographischen Schlüssels verschlüsselt. Den Datenelementen in dem dritten Index 115 sind beispielsweise ferner jeweils zweite Angaben zugeordnet sind, welche beispielsweise jeweils in adressierbarerer Weise die Datensätze identifizieren, in denen die Datenelemente jeweils gespeichert sind. Beispielsweise identifizieren die zweiten Angaben die verschlüsselten Datensätze 149, welche der Datenbankserver 140 zum Abruf bereitstellt. Die Datensätze 149 sind beispielsweise Kopien der Datensätze 128, welche mit einem vierten kryptographischen Schlüssel verschlüsselt sind. Beispielsweise kann ein Ausführen der Programminstruktionen 106 den Indexserver 100 ferner dazu veranlassen die verschlüsselte Indexstruktur 108 von dem Datenbankcomputersystem 120 zu empfangen oder die Indexstruktur 108 selbst unter Verwendung der Datensätze 128 zu erstellen. Beispielsweise verfügt der Indexserver 100 ferner über kryptographische Schlüssel 107 zum indexindividuellen Verschlüsseln der Indizes 111, 113, 115 und/oder zum Umverschlüsseln von Suchergebnissen für ein anfragendes Nutzercomputersystem 160.

Der Datenbankserver 140 umfasst beispielsweise einen Prozessor 142, einen Speicher 144 mit Programminstruktionen 146 und eine Kommunikationsschnittstelle 150 zur Kommunikation über das Netzwerk 210. Ferner sind in dem Speicher 154 beispielsweise verschlüsselte Datensätzen 149 gespeichert, bei welchen es sich um verschlüsselte Kopien der von dem Datenbankcomputersystem 120 verwalteten Datensätze 128 handelt. Bei einem Ausführen der Programminstruktionen 146 durch den Prozessor 142 steuert der Prozessor 142 ein Bereitstellen der Datensätze 149 durch den Datenbankserver 140 zum Abrufen über das Netzwerk. Der Datenbankserver 140 empfängt beispielsweise eine Leseanfrage über das Netzwerk 210, prüft eine in der Suchanfrage nachgewiesenen Leseberechtigung zum Lesen der angefragten Datensätze, und sendet im Falle einer gültigen Leseberechtigung eine Antwort mit den angefragten Datensätzen über das Netzwerk 210. Für ein Erstellen einer gültigen Leseanfrage ist beispielsweise eine Kenntnis korrekter Identifikatoren der auszulesenden Datensätze notwendig. Diese Identifikatoren umfassen beispielsweise eine URL unter welcher die Datensätze zum Abruf bereitgestellt werden, einen Identifikator der Datenbank und/oder einen Identifikator des individuellen zu lesenden Datensatzes. Die entsprechenden Kenntnisse können beispielsweise durch eine erfolgreiche Suche in der Indexstruktur 108 erlangt werden. Beispielsweise stellt die Indexstruktur 108 entsprechende Informationen in Form der zweiten Angaben des dritten Index 115 zur Verfügung. Leseberechtigung zum Lesen von Datensätzen werden beispielsweise nur einzelfallgebunden, etwa mit beschränkter Zugriffsanzahl und Zugriffszeitraum, von einer unabhängigen Kontrollinstanz gewährt. Beispielsweise kann ein Ausführen der Programminstruktionen 106 den Datenbankserver 140 ferner dazu veranlassen die verschlüsselten Datensätze 149 von dem Datenbankcomputersystem 120 zu empfangen. Beispielsweise können die Datensätze 149 auch von dem Datenbankcomputersystem 120 zum Abruf bereitgestellt werden. Dann wären Datenbankcomputersystem 120 und Datenbankserver 140 identisch. Beispielsweise verfügt der Datenbankserver 140 ferner über kryptographische Schlüssel 147 zum Umverschlüsseln von der auszulesenden Datensätze 149 für ein anfragendes Nutzercomputersystem 160.

Beispielsweise kann auch der Indexserver 100 zusätzlich als Datenbankserver konfiguriert sein und die verschlüsselten Datensätze 149 bereitstellen. Beispielsweise kann der Indexserver 100 in diesem Fall auch die kryptographischen Schlüssel 147 umfassen.

Das Nutzercomputersystem 160 umfasst beispielsweise einen Prozessor 162, einen Speicher 164 mit Programminstruktionen 166 und eine Kommunikationsschnittstelle 172 zur Kommunikation über das Netzwerk 210. Bei einem Ausführen der Programminstruktionen 166 durch den Prozessor 162 steuert der Prozessor 162 das Nutzercomputersystem 160 beispielsweis zum Erstellen von Suchhanfragen, welche an den Indexserver 100 gesendet werden und zum Erstellen von Leseanfrage, welche an den Datenbankserver 140 gesendet werden. Zum Nachweis von Berechtigungsstufen zum Ausführen von Suchen in der Indexstruktur 108 verfügt das Nutzercomputersystem 160 über einen Berechtigungsnachweis 168. Zum Nachweis eine Zugriffs- bzw. Leseberechtigung zum Lesen der Datensätze 128 verfügt das Nutzercomputersystem 160 beispielsweise über einen weiteren Berechtigungsnachweis 170. Ferner verfügt das Nutzercomputersystem 160 über kryptographische Schlüssel zum Verschlüsseln von Suchbegriffen für Suchen in den verschlüsselten Indizes 111, 113, 115, zum Entschlüsseln verschlüsselter Suchergebnisse und/oder zum Entschlüsseln verschlüsselter Datensätze 149.

Eine Kommunikation über das Netzwerk 210 zwischen zwei der zuvor genannten Computersysteme bzw. Server setzt beispielsweise zunächst einen Aufbau eines kryptographisch gesicherten Kommunikationskanals zwischen den miteinander kommunizierenden Computersystemen bzw. Servern voraus. Ein Aufbau eines solchen Kommunikationskanal umfasst beispielsweise ein gegenseitiges Authentifizieren, beispielsweise unter Verwendung von Zertifikaten, und ein Aushandeln ephemerer kryptographischer Sitzungsschlüssel, beispielsweise symmetrischer ephemerer kryptographischer Schlüssel, zum Verschlüsseln der Kommunikation zwischen den Computersystemen bzw. Servern. Beispielsweise wird durch das Verschlüsseln eine Ende-zu-Ende-Verschlüsselung zwischen den Computersystemen bzw. Servern implementiert.

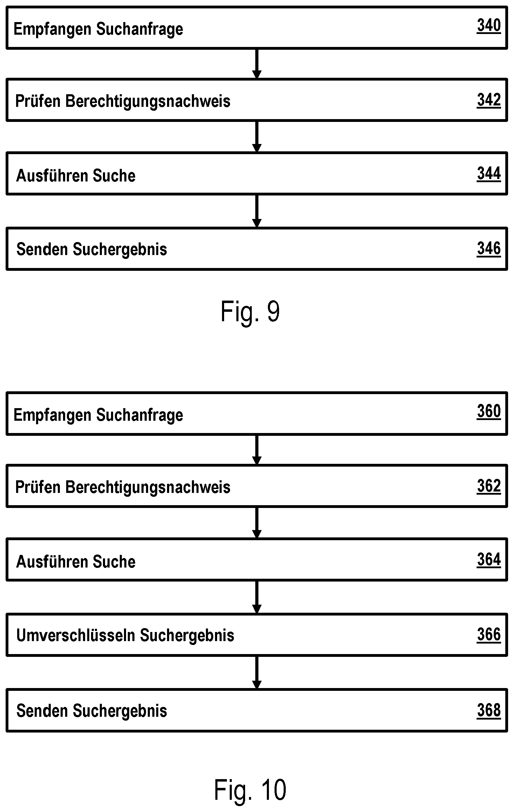

Figur 9 zeigt ein exemplarisches Verfahren zum verschlüsselten Suchen in einer Datenbank. Für die Suche wird eine verschlüsselte Indexstruktur der Datenbank verwendet, welche von einem Computersystem, beispielsweise einem Server, für Suchen bereitgestellt wird. Die Indexstruktur umfasst einen ersten Index, welcher eine erste Aufstellung der von den Datensätzen der Datenbank umfassten Datenelemente umfasst. Die Datenelemente des ersten Index sind beispielsweis jeweils unter Verwendung eines ersten kryptographischen Schlüssels verschlüsselt. Beispielsweise umfasst die Indexstruktur ferner einen zweiten Index, welcher eine zweite Aufstellung der von den Datensätzen der Datenbank umfassten Datenelemente umfasst. Die Datenelemente des zweiten Index sind beispielsweise jeweils unter Verwendung eines zweiten kryptographischen Schlüssels verschlüsselt. Den Datenelementen in dem zweiten Index sind beispielsweise jeweils erste Angaben zugeordnet sind, aus welchen sich eine Häufigkeit des Auftretens der entsprechenden Datenelemente in der Datenbank ergibt. Beispielsweise umfasst die Indexstruktur ferner einen dritten Index, welcher eine dritte Aufstellung der von den Datensätzen der Datenbank umfassten Datenelemente umfasst. Die Datenelemente des dritten Index sind beispielsweise jeweils unter Verwendung eines dritten kryptographischen Schlüssels verschlüsselt. Den Datenelementen in dem dritten Index sind beispielsweise jeweils zweite Angaben zugeordnet sind, welche beispielsweise jeweils in adressierbarerer Weise die Datensätze identifizieren, in denen die Datenelemente jeweils gespeichert sind. Beispielsweise setzt ein Zugriff auf jeden der Indizes jeweils einen Nachweis einer indexindividuellen Zugriffsberechtigung voraussetzt. Beispielsweise sind die ersten Angaben ebenfalls jeweils unter Verwendung des zweiten kryptographischen Schlüssels verschlüsselt und/oder die zweiten Angaben ebenfalls jeweils unter Verwendung des dritten kryptographischen Schlüssels verschlüsselt. Nach alternativen Ausführungsformen sind die ersten und/oder zweiten Angaben jeweils unverschlüsselt. Beispielsweise ermöglicht der erste Index Suchen danach, ob ein oder mehrere gesuchte Datenelemente in der Datenbank vorhanden sind. Eine Suchanfrage für eine entsprechende Suche identifiziert beispielsweise den ersten Index und definiert eine Suche nach einem Vorhandensein der ein oder mehreren Datenelemente in der Datenbank. Die entsprechende Suchanfrage umfasst beispielsweise einen Berechtigungsnachweis, welcher eine Zugriffsberechtigung auf den ersten Index nachweist. Suchergebnisse einer solchen Suche geben beispielsweise an, ob die gesuchten ein oder mehreren Datenelemente in der Datenbank vorhanden sind. Beispielsweise ermöglicht der zweite Index Suchen nach statistischen Merkmalen der in der Datenbank vorhandenen Datenelemente. Eine Suchanfrage für eine entsprechende Suche identifiziert beispielsweise den zweiten Index und definiert eine Anfrage nach ein oder mehreren statistischen Merkmalen ein oder mehreren gesuchter Datenelemente in der Datenbank. Die entsprechende Suchanfrage umfasst beispielsweise einen Berechtigungsnachweis, welcher eine Zugriffsberechtigung auf den zweiten Index nachweist. Suchergebnisse einer solchen Suche geben beispielsweise die angefragten statistischen Merkmale der ein oder mehreren gesuchter Datenelemente an. Beispielsweise ermöglicht der dritte Index Suchen nach Identifikatoren von ein oder mehreren der Datensätze der Datenbank, welche ein oder mehrere gesuchte Datenelemente umfassen. Eine Suchanfrage für eine entsprechende Suche identifiziert beispielsweise den dritten Index und definiert eine Anfrage nach den Identifikatoren der Datensätze, welche die ein oder mehrere gesuchte Datenelemente umfassen. Die entsprechende Suchanfrage umfasst beispielsweise einen Berechtigungsnachweis, welcher eine Zugriffsberechtigung auf den dritten Index nachweist. Suchergebnisse einer solchen Suche umfassen beispielsweise die angefragten Identifikatoren, welche es dem Empfänger der Suchergebnisse beispielsweise ermöglichen, eine Leseanfrage zum Auslesen der identifizierten Datensätze zu erzeugen und/oder zu adressieren.

In Block 340 empfängt das die Indexstruktur bereitstellende Computersystem von einem anfragenden Computersystem beispielsweise eine Suchanfrage zum Ausführen einer Suche in der Indexstruktur. Die Suchanfrage identifiziert einen oder mehrere der Indizes, auf welchen jeweils eine Suche ausgeführt werden soll und umfasst für jeden der identifizierten Indizes jeweils ein oder mehrere Datenelemente als Suchbegriffe. Beispielsweise sind die Suchbegriffe jeweils unter Verwendung des kryptographischen Schlüssels verschlüsselt, mit welchem die Datenelemente des Index verschlüsselt sind, auf dem die entsprechende Suche ausgeführt werden soll. Soll eine Suche auf dem ersten Index ausgeführt werden, sind die Suchbegriffe der entsprechenden Suche beispielsweise unter Verwendung des ersten kryptographischen Schlüssels verschlüsselt. Soll eine Suche auf dem zweiten Index ausgeführt werden, sind die Suchbegriffe der entsprechenden Suche beispielsweise unter Verwendung des zweiten kryptographischen Schlüssels verschlüsselt. Soll eine Suche auf dem dritten Index ausgeführt werden, sind die Suchbegriffe der entsprechenden Suche beispielsweise unter Verwendung des dritten kryptographischen Schlüssels verschlüsselt. Ferner umfasst die Suchanfrage beispielsweise für jeden der identifizierten Indizes jeweils einen Berechtigungsnachweis. In Block 342 prüft das die Indexstruktur bereitstellende Computersystem die empfangenen Berechtigungsnachweise für die identifizierten Indizes. In Block 344 führt das die Indexstruktur bereitstellende Computersystem die angefragten Suchen auf den identifizierten Indizes, für welche jeweils ein gültiger Berechtigungsnachweis vorliegt. In Block 346 sendet das die Indexstruktur bereitstellende Computersystem die Suchergebnisse der in Block 344 ausgeführten Suchen in Antwort auf die in Block 340 empfangene Suchanfrage an das anfragende Computersystem. Die Suchergebnisse werden dem anfragenden Computersystem beispielsweise über einen verschlüsselten Kommunikationskanal zugesendeten, dessen Kommunikation mit einem ephemereren, beispielsweise symmetrischen, Sitzungsschlüssel, verschlüsselt ist. Beispielsweise sind die Suchergebnisse abgesehen von der Verschlüsselung mit dem ephemeren Sitzungsschlüssel, nicht zusätzlich verschlüsselt. Beispielsweise verfügt auch das anfragende Computersystem über einen ephemeren Schlüssel zum Entschlüsseln der Kommunikation über den verschlüsselten Kommunikationskanal, etwa den ephemereren, beispielsweise symmetrischen, Sitzungsschlüssel.

Beispielsweise erfolgt zunächst eine erste Suche auf dem ersten Index danach, ob bestimmte Datenelement in der Datenbank enthalten sind. Die entsprechende Suche beschränkt sich beispielsweise auf den ersten Index. Umfasst die Datenbank relevante Begriffe, erfolgt beispielsweise eine zweite Suche auf dem zweiten Index, danach in welchem Umfang die Datenbank die relevanten Begriffe als Datenelemente umfasst. Beispielsweise kann die zweite Suche auch ermitteln, ob die Datenbank die relevanten Begriffe in Kombination miteinander umfasst, d.h. als Datenelemente in demselben Datensatz umfasst. Beispielsweise kann die zweite Suche auch ermitteln, wie oft die Datenbank und/oder in wie vielen Datensätze die Datenbank die relevanten Begriffe in Kombination miteinander umfasst. Beispielsweise kann anstelle der ersten Suche auch direkt die zweite Suche ausgeführt werden. Beispielsweise können die erste und zweite Suche auch mit einer gemeinsamen Suchabfrage angefragt werden. Schließlich wird nach der ersten oder zweiten Suche beispielsweise eine dritte Suche auf dem dritten Index ausgeführt, welche als Suchergebnis den Suchbegriffen bzw. den entsprechen Datenelementen zugeordnete zweite Angaben umfasst, welche die Datensätze der Datenbank identifizieren, in denen die jeweiligen Datenelemente gespeichert sind. Beispielsweise kann anstelle der ersten und/oder zweiten Suche auch direkt die dritte Suche ausgeführt werden. Beispielsweise kann die dritte Suche auch in Kombination mit der ersten und/oder zweiten Suche mit einer gemeinsamen Suchabfrage angefragt werden. Allerdings kann ein vorheriges Ausführen der zweiten Suche helfen die dritte Suche besser einzuschränken auf solche Datensätze, welche die Suchbegriffe tatsächlich in einem relevanten Kontext, d.h. in einer relevanten Kombination, und/oder in einer relevanten Anzahl umfassen. Beispielsweise ist eine Kenntnis der entsprechenden zweiten Angaben und mithin ein erfolgreiches Ausführen einer entsprechenden dritten Suche Voraussetzung für ein Auslesen von Datensätzen aus der Datenbank.

Figur 10 zeigt ein exemplarisches Verfahren zum verschlüsselten Suchen in einer Datenbank. Die Blöcke 360 bis 364 entsprechen dabei beispielsweise den Blöcken 340 bis 346 der Figur 9. In Block 366 werden die Suchergebnisse der in Block 364 ausgeführten Suchen umverschlüsselt. Beispielsweise verfügt das anfragende Computersystem über kryptographische Schlüssel zum Verschlüsseln der Datenelemente als Suchbegriffe, wie etwa beispielsweise den ersten, zweiten oder dritten kryptographische Schlüssel. Die so verschlüsselten Suchbegriffe können im Zuge der Suche mit den verschlüsselten Datenelementen der Indizes, welche durchsucht werden, abgeglichen werden. Sind allerdings auch die Suchergebnisse verschlüsselt, beispielsweise die ersten oder zweiten Angaben, so vermag es das anfragende Computersystem mit seinen Schlüsseln beispielsweise nicht die entsprechenden Suchergebnisse auch zu entschlüsseln. Beispielsweise handelt es sich bei den dem anfragenden Computersystem zum Verschlüsseln der Suchbegriffe zur Verfügung stehende kryptographische Schlüssel ausschließlich um öffentliche kryptographische Schlüssel. Beispielsweise werden die Suchergebnisse vor dem Senden unter Verwendung eines indexindividuellen Re-Encryption-Schlüssels des Index, auf welche die entsprechende Suche ausgeführt wurde, umverschlüsselt. Der entsprechende Re-Encryption-Schlüssel wird beispielsweise unter Verwendung eines geheimen kryptographischen Schlüssels eines die Datenbank verwaltenden Computersystems und eines indexindividuellen öffentlichen kryptographischen Schlüssels, dessen zugehöriger privater kryptographischer Schlüssel dem anfragenden Computersystem zur Verfügung steht, erzeugt. Durch die Umverschlüsselung wird das anfragende Computersystem dazu in die Lage versetzt mit dem ihm zur Verfügung stehenden privaten kryptographischen Schlüssel die umverschlüsselten Suchergebnisse zur entschlüsseln. In Block 368 sendet das die Indexstruktur bereitstellende Computersystem schließlich die umverschlüsselten Suchergebnisse in Antwort auf die in Block 360 empfangene Suchanfrage an das anfragende Computersystem.

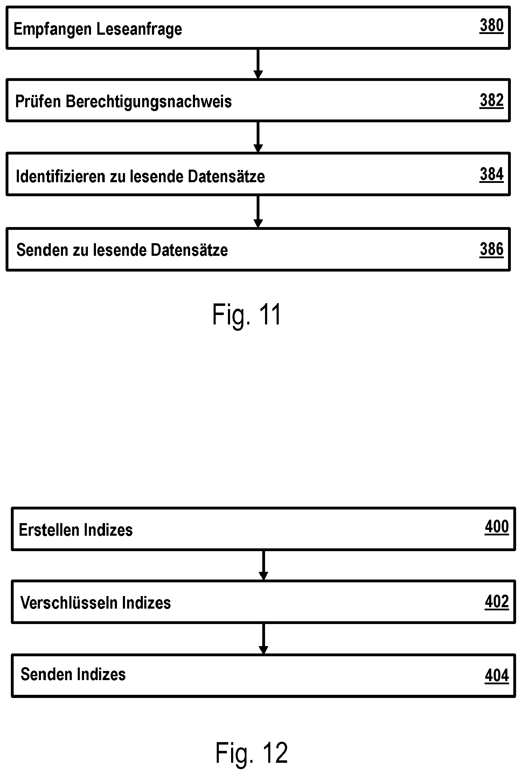

Figur 11 zeigt ein exemplarisches Verfahren zum Lesen von Datensätzen der Datenbank. In Block 380 empfängt ein die Datensätze zum Abruf bereitstellendes Computersystem, beispielsweise ein Datenbankserver, eine Leseanfrage des anfragenden Computersystems. Beispielsweise sind die Datensätze in dem bereitstellenden Computersystem unverschlüsselt gespeichert. Beispielsweise sind die Datensätze in dem bereitstellenden Computersystem unter Verwendung eines kryptographischen Schlüssels verschlüsselt gespeichert. Bei den von den zweiten Angaben des dritten Index der Indexstruktur identifizierten Speicherorten handelt es sich beispielwiese um Speicherorte der entsprechenden Datensätze auf dem bereitstellenden Computersystem, z.B. einen Datenbankserver. Die Leseanfrage umfasst beispielsweise Angaben der Speicherorte der auszulesenden Datensätze. Die Leseanfrage umfasst ferner beispielsweise einen Berechtigungsnachweis, welcher eine Zugriffsberechtigung bzw. eine Leseberechtigung des anfragenden Computersystems zum Auslesen der angefragten Datensätze nachweist. In Block 382 prüft das die Datensätze zum Abruf bereitstellendes Computersystem die Leseanfrage. In Block 384 identifiziert das die Datensätze zum Abruf bereitstellendes Computersystem anhand der Angaben der Leserumfrage die auszulesenden Datensätze und sendet diese in Block 386 an das anfragende Computersystem, falls der Berechtigungsnachweis erfolgreich eine entsprechende Zugriffs- bzw. Leseberechtigung des anfragenden Computersystems nachweist.

Beispielsweise werden die auszulesenden Datensätze von dem die Datensätze bereitstellenden Computersystem vor dem Senden umverschlüsselt. Beispielsweise werden die auszulesenden Datensätze vor dem Senden unter Verwendung eines Re-Encryption-Schlüssels umverschlüsselt. Der entsprechende Re-Encryption-Schlüssel wird beispielsweise unter Verwendung eines geheimen kryptographischen Schlüssels eines die Datenbank verwaltenden Computersystems und eines öffentlichen kryptographischen Schlüssels, dessen zugehöriger privater kryptographischer Schlüssel dem anfragenden Computersystem zur Verfügung steht, erzeugt. Durch die Umverschlüsselung wird das anfragende Computersystem dazu in die Lage versetzt mit dem ihm zur Verfügung stehenden privaten kryptographischen Schlüssel die umverschlüsselten Datensätze zu entschlüsseln.

Beispielsweise werden die auszulesenden Datensätze dem anfragenden Computersystem über einen verschlüsselten Kommunikationskanal zugesendeten, dessen Kommunikation mit einem ephemereren, beispielsweise symmetrischen, Sitzungsschlüssel, verschlüsselt ist. Beispielsweise sind die auszulesenden Datensätze abgesehen von der Verschlüsselung mit dem ephemeren Sitzungsschlüssel, nicht zusätzlich verschlüsselt. Beispielsweise verfügt auch das anfragende Computersystem über einen ephemeren Schlüssel zum Entschlüsseln der Kommunikation über den verschlüsselten Kommunikationskanal, etwa den ephemereren, beispielsweise symmetrischen, Sitzungsschlüssel.

Figur 12 zeigt ein exemplarisches Verfahren zum Erstellen verschlüsselter Indizes. In Block 400 erstellt beispielsweise ein die Datenbank verwaltendes Computersystem drei Indizes der Datenbank. Bei der Datenbank handelt es sich beispielsweise um eine Datenbank in der fünften oder sechsten Normalform. Beispielsweise werden in der Datenbank zu speichernde Daten bzw. Datensätze zunächst in einem Datencontainer gespeichert gemäß einem ersten Datenbankmodell und anschließend in einem zweiten Datenbankmodell mit der Datenbank in der fünften oder sechsten Normalform ergänzt. Beispielsweise werden in der Datenbank zu speichernde Daten bzw. Datensätze direkt in einem Datenbankmodell mit der Datenbank in der fünften oder sechsten Normalform gespeichert. Unter Verwendung der Datenbank in der fünften oder sechsten Normalform werden die Indizes erstellt. Der erste der Indizes umfasst beispielsweise eine erste Aufstellung der von den Datensätzen der Datenbank umfassten Datenelemente. Ein zweiter Index umfasst beispielsweise eine zweite Aufstellung der von den Datensätzen der Datenbank umfassten Datenelemente. Den Datenelementen in dem zweiten Index werden beispielsweise jeweils die ersten Angaben zugeordnet, aus welchen sich eine Häufigkeit des Auftretens der entsprechenden Datenelemente in der Datenbank ergibt. Ein dritter Index umfasst beispielsweise eine dritte Aufstellung der von den Datensätzen der Datenbank umfassten Datenelemente. Den Datenelementen in dem dritten Index werden beispielsweise jeweils zweite Angaben zugeordnet sind, welche beispielsweise jeweils in adressierbarerer Weise die Datensätze identifizieren, in denen die Datenelemente jeweils gespeichert sind. In Block 402 werden die Indizes verschlüsselt. Beispielsweise werde die Datenelemente des ersten Index unter Verwendung eines ersten kryptographischen Schlüssels verschlüsselt, die Datenelemente des zweiten Index unter Verwendung eines zweiten kryptographischen Schlüssels und die Datenelemente des dritten Index unter Verwendung eines dritten kryptographischen Schlüssels. Beispielsweise werden die ersten Angaben ebenso unter Verwendung des zweiten kryptographischen Schlüssels und/oder die zweiten Angaben unter Verwendung des dritten kryptographischen Schlüssels verschlüsselt. Beispielsweise bleiben die ersten und/oder zweiten Angaben unverschlüsselt. Die Reihenfolgen der Datenelemente in der ersten, zweite und/oder dritten Aufstellungen werden dabei vor oder nach dem Verschlüsseln permutiert. Im Ergebnis umfasst die erste Aufstellung die Datenelemente beispielsweise in einer ersten Reihenfolge, die zweite Aufstellung die Datenelemente in einer zweiten Reihenfolge und die dritte Aufstellung die Datenelemente in einer dritten Reihenfolge. Die zweite Reihenfolge ist dabei beispielsweise relativ zu der ersten Reihenfolge permutiert ist und die dritte Reihenfolge ist beispielsweise relativ zu der ersten und der zweiten Reihenfolge permutiert. Beispielsweise ist keine der Reihenfolgen der drei Aufstellungen mit einer ursprünglichen, beispielsweise alphabetischen, Aufstellung der Datenelemente identisch. Beispielsweise ist eine der drei Reihenfolgen mit der ursprünglichen Aufstellung der Datenelemente identisch. In Block 404 werden die drei erstellten Indizes von dem die Datenbank verwaltenden Computersystem an ein die Indexstruktur bereitstellendes Computersystem gesendet.

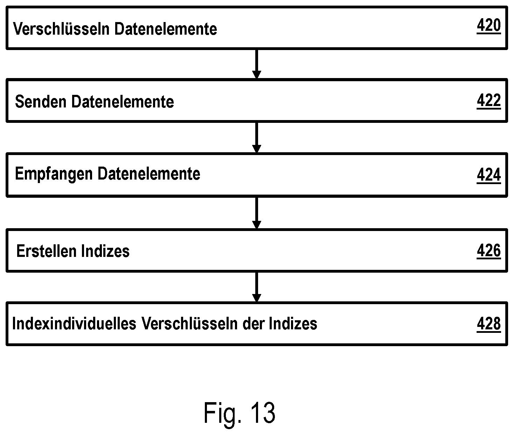

Figur 13 zeigt ein exemplarisches Verfahren zum Erstellen verschlüsselter Indizes. In Block 420 werden die Datenelemente der Datensätze der Datenbank, welche beispielsweise in der fünften oder sechsten Normalform strukturiert ist, elementweise verschlüsselt. Beispielsweise verschlüsselt ein die Datenbank verwaltendes Computersystem die Datensätze. Die Verschlüsselung erfolgt beispielsweise unter Verwendung eines privaten kryptographischen Schlüssels des die Datenbank verwaltenden Computersystems. In Block 422 werden die verschlüsselten Datensätze von dem die Datenbank verwaltenden Computersystem an ein die Indexstruktur bereitstellendes Computersystem gesendet. In Block 424 empfängt das die Indexstruktur bereitstellende Computersystem die verschlüsselten Datensätze und erstellt in Block 426 die drei Indizes unter Verwendung der verschlüsselten Datensätze, wobei die Datenelemente der drei Aufstellungen der drei Indizes in diesem Stadium noch die gleich Verschlüsselung unter Verwendung eines gemeinsamen kryptographischen Schlüssels aufweisen, beispielsweise des privaten kryptographischen Schlüssels des die Datenbank verwaltenden Computersystems. In Block 428 werden die Datenelemente der drei Indizes durch das die Indexstruktur bereitstellende Computersystem jeweils indexindividuell verschlüsselt, beispielsweise jeweils unter Verwendung eines indexspezifischen symmetrischen kryptographischen Schlüssels.

### Bezugszeichenliste

- 100: Indexserver
- 102: Prozessor
- 104: Speicher
- 106: Programminstruktionen
- 107: Schlüssel
- 108: Indexstruktur
- 110: Aufstellung Datenelemente
- 111: erster Index
- 112: erste Angaben
- 113: zweiter Index
- 114: zweite Angaben
- 115: dritter Index
- 116: Kommunikationsschnittstelle
- 120: Datenbankcomputer
- 122: Prozessor
- 124: Speicher
- 125: Datenbank
- 126: Programminstruktionen
- 127: Schlüssel
- 128: Datensätze
- 130: Kommunikationsschnittstelle
- 140: Datenbankserver
- 142: Prozessor
- 144: Speicher
- 145: Datenbank
- 146: Programminstruktionen
- 149: verschlüsselte Datensätze
- 150: Kommunikationsschnittstelle
- 160: Nutzercomputer
- 162: Prozessor
- 164: Speicher
- 166: Programminstruktionen
- 167: Schlüssel
- 168: erster Berechtigungsnachweis
- 170: zweiter Berechtigungsnachweis
- 172: Kommunikationsschnittstelle
- 173: Schlüssel
- 174: Schlüssel
- 175: Schlüssel
- 200: System
- 210: Netzwerk
- 220: Suchanfrage
- 222: Suchergebnis
- 240: Ausleseanfrage
- 242: Ausleseergebnis

## Patentansprüche

1. Verfahren für eine verschlüsselte Suche in einer Datenbank (125), wobei eine durchsuchbare, verschlüsselte Indexstruktur (108) der Datenbank (125) auf einem ersten Server (100) bereitgestellt wird,
wobei die Indexstruktur (108) einen ersten Index (111) umfasst, welcher eine erste Aufstellung (110.1) der von den Datensätzen der Datenbank (125) umfassten Datenelemente umfasst, wobei die Datenelemente des ersten Index (111) jeweils unter Verwendung eines ersten kryptographischen Schlüssels verschlüsselt sind,
wobei die Indexstruktur (108) ferner einen zweiten Index (113) umfasst, welcher eine zweite Aufstellung (110.2) der von den Datensätzen der Datenbank (125) umfassten Datenelemente umfasst, wobei die Datenelemente des zweiten Index (113) jeweils unter Verwendung eines zweiten kryptographischen Schlüssels verschlüsselt sind, wobei den Datenelementen in dem zweiten Index (113) jeweils erste Angaben (112) zugeordnet sind, aus welchen sich eine Häufigkeit des Auftretens der entsprechenden Datenelemente in der Datenbank (125) ergibt,
wobei die Indexstruktur (108) ferner einen dritten Index (115) umfasst, welcher eine dritte Aufstellung (110.3) der von den Datensätzen der Datenbank (125) umfassten Datenelemente umfasst, wobei die Datenelemente des dritten Index (115) jeweils unter Verwendung eines dritten kryptographischen Schlüssels verschlüsselt sind, wobei den Datenelementen in dem dritten Index (115) jeweils zweite Angaben (114) zugeordnet sind, welche jeweils in adressierbarerer Weise die Datensätze identifizieren, in denen die Datenelemente jeweils gespeichert sind,
wobei jeder der Indizes jeweils eine Suche in der gesamten Menge der von der Datenbank umfassten Datenelemente ermöglicht und die Indizes jeweils Suchen in den Datenelementen mit unterschiedlichen Schwerpunkten erlauben,
wobei ein Zugriff auf jeden der Indizes (111, 113, 115) jeweils einen Nachweis einer indexindividuellen Zugriffsberechtigung voraussetzt,
wobei der erste Index (111) Suchen danach ermöglicht, ob ein oder mehrere gesuchte Datenelemente in der Datenbank (125) vorhanden sind, wobei die Suchergebnisse (222) lediglich angeben, ob die ein oder mehreren gesuchten Datenelemente in der Datenbank (125) vorhanden sind,
wobei der zweite Index (113) Suchen nach statistischen Merkmalen der in der Datenbank (125) vorhandenen Datenelemente ermöglicht, wobei die Suchergebnisse (222) angefragte statistische Merkmale der ein oder mehreren gesuchten Datenelemente angeben,
wobei der dritte Index (115) Suchen nach Identifikatoren von ein oder mehreren der Datensätze der Datenbank (125) ermöglicht, welche ein oder mehrere gesuchte Datenelemente umfassen, wobei die Suchergebnisse angefragte Identifikatoren umfassen, wobei die Identifikatoren es dem Empfänger der Suchergebnisse (222) ermöglichen, eine Leseanfrage (240) zum Auslesen der identifizierten Datensätze zu erzeugen und/oder zu adressieren,
wobei das Verfahren umfasst:
Empfangen einer Suchanfrage (220) zum Ausführen einer Suche in der Indexstruktur (108), wobei die Suchanfrage (220) einen oder mehrere der Indizes (111, 113, 115) identifiziert, auf welchen jeweils eine Suche ausgeführt werden soll, wobei die Suchanfrage (220) für jeden der identifizierten Indizes (111, 113, 115) jeweils ein oder mehrere Datenelemente als Suchbegriffe umfasst, wobei die Suchanfrage (220) für jeden der identifizierten Indizes (111, 113, 115) jeweils einen Berechtigungsnachweis (168) umfasst,
Prüfen der Berechtigungsnachweise (168) für die identifizierten Indizes (111, 113, 115),
Ausführen der Suchen auf den identifizierten Indizes (111, 113, 115), für welche jeweils ein gültiger Berechtigungsnachweis (168) vorliegt,
Senden der Suchergebnisse (222) in Antwort auf die Suchanfrage (220).

2. Verfahren nach Anspruch 1, wobei es sich bei dem ersten kryptographischen Schlüssel, dem zweiten kryptographischen Schlüssel und dem dritten kryptographischen Schlüssel jeweils um einen indexindividuellen öffentlichen kryptographischen Schlüssel handelt.

3. Verfahren nach Anspruch 1, wobei es sich bei dem ersten kryptographischen Schlüssel, dem zweiten kryptographischen Schlüssel und dem dritten kryptographischen Schlüssel jeweils um einen indexindividuellen symmetrischen Schlüssel handelt oder
wobei es sich bei dem ersten kryptographischen Schlüssel, dem zweiten kryptographischen Schlüssel und dem dritten kryptographischen Schlüssel jeweils um ein Kombination aus einem gemeinsamen öffentlichen kryptographischen Schlüssel und einem indexindividuellen symmetrischen kryptographischen Schlüssel handelt.

4. Verfahren nach Anspruch 1, wobei es sich bei dem zweiten kryptographischen Schlüssel und dem dritten kryptographischen Schlüssel jeweils um einen indexindividuellen Re-Encryption-Schlüssel eines asymmetrischen Proxy Re-Encryption-Verfahrens handelt, welcher unter Verwendung eines geheimen kryptographischen Schlüssels eines die Datenbank (125) verwaltenden Computersystems (120) und eines indexindividuellen öffentlichen kryptographischen Schlüssels, dessen zugehöriger privater kryptographischer Schlüssel ein oder mehreren zum Zugriff auf den entsprechenden Index berechtigten Computersystemen (160) zur Verfügung steht, erzeugt wird.

5. Verfahren nach Anspruch 4, wobei die Datenelemente des ersten, zweiten und dritten Index (111, 113, 115) im Zuge des Erstellens der entsprechenden Indizes (111, 113, 115) jeweils unter Verwendung eines gemeinsamen oder indexindividuellen öffentlichen Schlüssels des die Datenbank (125) verwaltenden Computersystem (120) verschlüsselt werden, wobei die Proxy Re-Encryption unter Verwendung des jeweiligen indexindividuellen Re-Encryption-Schlüssel jeweils auf die unter Verwendung des gemeinsamen oder indexindividuellen öffentlichen Schlüssels verschlüsselten Datenelemente angewendet wird.

6. Verfahren nach einem der Ansprüche 1 bis 2, wobei die Suchergebnisse (222) vor dem Senden unter Verwendung eines indexindividuellen Re-Encryption-Schlüssels eines Proxy Re-Encryption-Verfahrens umverschlüsselt werden, welcher unter Verwendung eines geheimen kryptographischen Schlüssels eines die Datenbank (125) verwaltenden Computersystems (120) und eines indexindividuellen öffentlichen kryptographischen Schlüssels, dessen zugehöriger privater kryptographischer Schlüssel ein oder mehreren zum Zugriff auf den entsprechenden Index (111, 113, 115) berechtigten Computersystemen (160) zur Verfügung steht, erzeugt wird.

7. Verfahren nach Anspruch einem der vorangehenden Ansprüche, wobei die ersten Angaben (112) ebenfalls jeweils unter Verwendung des zweiten kryptographischen Schlüssels verschlüsselt sind und/oder
wobei die zweiten Angaben (114) ebenfalls jeweils unter Verwendung des dritten kryptographischen Schlüssels verschlüsselt sind und/oder
wobei die Suchanfrage (220) den ersten Index (111) identifiziert und eine Suche nach einem Vorhandensein der ein oder mehreren Datenelemente in der Datenbank (125) definiert, wobei die Suchanfrage (220) einen Berechtigungsnachweis (168) umfasst, welcher eine Zugriffsberechtigung auf den ersten Index (111) nachweist, und/oder
wobei die Suchanfrage (220) den zweiten Index (113) identifiziert und eine Anfrage nach ein oder mehreren statistischen Merkmalen ein oder mehrerer gesuchter Datenelemente in der Datenbank (125) definiert, wobei die Suchanfrage (220) einen Berechtigungsnachweis (168) umfasst, welcher eine Zugriffsberechtigung auf den zweiten Index (113) nachweist, und/oder
wobei die Suchanfrage (220) den dritten Index (115) identifiziert und eine Anfrage nach den Identifikatoren der Datensätze definiert, welche die ein oder mehrere gesuchte Datenelemente umfassen, wobei die Suchanfrage (220) einen Berechtigungsnachweis (168) umfasst, welcher eine Zugriffsberechtigung auf den dritten Index (115) nachweist, und/oder
wobei die erste Aufstellung (110.1) die Datenelemente in einer ersten Reihenfolge, die zweite Aufstellung (110.2) die Datenelemente in einer zweiten Reihenfolge und die dritte Aufstellung (110.3) die Datenelemente in einer dritten Reihenfolge umfasst, wobei die zweite Reihenfolge relativ zu der ersten Reihenfolge permutiert ist und wobei die dritte Reihenfolge relativ zu der ersten und der zweiten Reihenfolge permutiert ist, und/oder
wobei sich aus den ersten Angaben (112) ferner eine Anzahl an Datensätzen, welche die jeweiligen Datenelemente umfassen, und/oder eine Anzahl an Datenelementen je Datensatz, welcher die jeweiligen Datenelemente umfasst, ergibt, und/oder
wobei sich aus den ersten Angaben (112) ferner ergibt, ob Datenelemente von demselben Datensatz umfasst werden.

8. Verfahren nach einem der vorangehenden Ansprüche, wobei die zweiten Angaben (114) ferner jeweils die Speicherorte der identifizieren Datensätze angeben.

9. Verfahren nach Anspruch 8, wobei die Datensätze auf einem zweiten Server (140) zum Abruf bereitgestellt werden, wobei die Datensätze mit einem vierten kryptographischen Schlüssel verschlüsselt sind, wobei es sich bei den angegebenen Speicherorten um Speicherorte der entsprechenden Datensätze auf dem zweiten Server (140) handelt, oder
wobei es sich bei den angegebenen Speicherorten um Speicherorte der entsprechenden Datensätze für einen Zugriff über das die Datenbank (125) verwaltende Computersystem (120) handelt.

10. Verfahren nach einem der vorangehenden Ansprüche, wobei die als Suchbegriffe verwendeten Datenelemente der Suchanfrage (220) jeweils unter Verwendung des kryptographischen Schlüssels des entsprechenden Index (111, 113, 115) verschlüsselt sind oder
wobei die als Suchbegriffe verwendeten Datenelemente der empfangenen Suchanfrage (220) zum Ausführen der Suche jeweils unter Verwendung des kryptographischen Schlüssels des entsprechenden Index (111, 113, 115) verschlüsselt werden.

11. Verfahren nach einem der vorangehenden Ansprüche, wobei die Datenelemente jeweils individuelle Wörter in grammatikalischer Grundform und/oder Zahlenangaben umfassen und/oder
wobei die Datenbank (125) im Zuge des Erzeugens der Indexstruktur (108) in die fünfte oder sechste Normalform gebracht wird, wobei unter Verwendung der fünften oder sechsten Normalform die Indexstruktur (108) erstellt wird.

12. Verfahren nach einem der vorangehenden Ansprüche, wobei ein die Datenbank (125) verwaltendes Computersystem (120) die Indexstruktur (108) erstellt und die Verschlüsslungen unter Verwendung des ersten, zweiten und dritten kryptographischen Schlüssels ausführt, wobei das die Datenbank (125) verwaltende Computersystem (120) die Indexstruktur (108) an den ersten Server (100) sendet, oder
wobei das die Datenbank (125) verwaltende Computersystem (120) die einzelnen Datenelemente in den Datensätze der Datenbank (125) verschlüsselt und zum Erstellen der Indexstruktur (108) an den ersten Server (100) sendet,
wobei es sich bei der Verschlüsselung durch das die Datenbank (125) verwaltende Computersystem (120) beispielsweise um eine Verschlüsselung mit einem indexübergreifenden kryptographischen Schlüssel handelt und eine indexindividuelle Verschlüsselung beispielsweise durch den ersten Server (100) im Zuge des Erstellens der Indexstruktur (108) erfolgt.

13. Verfahren nach einem der vorangehenden Ansprüche, wobei der Berechtigungsnachweis die Form einer hierarchischen Kettenstruktur aufweist, welche für jeden Nutzer der Indexstruktur (108), der eine Zugriffsberechtigung auf einen der Indizes (111, 113, 115) besitzt, eine Erteilungskette umfasst, in welcher ausgehend von dem Ersteller des Datensatzes und/oder der Indexstruktur (108) bis zu dem Nutzer mit der entsprechenden Zugriffsberechtigung eine Abfolge von Nutzer der Indexstruktur (108) eingetragen ist, wobei innerhalb der Abfolge jeweils der vorangehende Nutzer dem nachfolgenden Nutzer die entsprechende Zugriffsberechtigung erteilt hat.

14. Server (100) für eine verschlüsselte Suche in einer Datenbank (125), wobei der Server (100) einen Prozessor (102), einen Speicher (104) mit ausführbaren Programminstruktionen (106) und eine Kommunikationsschnittstelle (116) zur Kommunikation über ein Netzwerk (210) umfasst,
wobei in dem Speicher (104) ferner eine durchsuchbare, verschlüsselte Indexstruktur (108) der Datenbank (125) gespeichert ist,
wobei die Indexstruktur (108) einen ersten index (111) umfasst, welcher eine erste Aufstellung (110.1) der von den Datensätzen der Datenbank (125) umfassten Datenelemente umfasst, wobei die Datenelemente des ersten index (111) jeweils unter Verwendung eines ersten kryptographischen Schlüssels verschlüsselt sind,
wobei die Indexstruktur (108) ferner einen zweiten index (113) umfasst, welcher eine zweite Aufstellung (110.2) der von den Datensätzen der Datenbank (125) umfassten Datenelemente umfasst, wobei die Datenelemente des zweiten index (113) jeweils unter Verwendung eines zweiten kryptographischen Schlüssels verschlüsselt sind, wobei den Datenelementen in dem zweiten index (113) jeweils erste Angaben (112) zugeordnet sind, aus welchen sich eine Häufigkeit des Auftretens der entsprechenden Datenelemente in der Datenbank ergibt,
wobei die Indexstruktur (108) ferner einen dritten index (115) umfasst, welcher eine dritte Aufstellung (110.3) der von den Datensätzen der Datenbank (125) umfassten Datenelemente umfasst, wobei die Datenelemente des dritten index (115) jeweils unter Verwendung eines dritten kryptographischen Schlüssels verschlüsselt sind, wobei den Datenelementen in dem dritten index (115) jeweils zweite Angaben (114) zugeordnet sind, welche jeweils in adressierbarerer Weise die Datensätze identifizieren in denen die Datenelemente jeweils gespeichert sind,
wobei jeder der Indizes jeweils eine Suche in der gesamten Menge der von der Datenbank umfassten Datenelemente ermöglicht und die Indizes jeweils Suchen in den Datenelementen mit unterschiedlichen Schwerpunkten erlauben,
wobei ein Zugriff auf jeden der Indizes (111, 113, 115) jeweils einen Nachweis einer indexindividuellen Zugriffsberechtigung voraussetzt,
wobei der erste index (111) Suchen danach ermöglicht, ob ein oder mehrere gesuchte Datenelemente in der Datenbank (125) vorhanden sind, wobei die Suchergebnisse (222) lediglich angeben, ob die ein oder mehreren gesuchten Datenelemente in der Datenbank (125) vorhanden sind,
wobei der zweite index (113) Suchen nach statistischen Merkmalen der in der Datenbank (125) vorhandenen Datenelemente ermöglicht, wobei die Suchergebnisse (222) angefragte statistische Merkmale der ein oder mehreren gesuchten Datenelemente angeben,
wobei der dritte index (115) Suchen nach Identifikatoren von ein oder mehreren der Datensätze der Datenbank (125) ermöglicht, welche ein oder mehrere gesuchte Datenelemente umfassen, wobei die Suchergebnisse angefragte Identifikatoren umfassen, wobei die Identifikatoren es dem Empfänger der Suchergebnisse (222) ermöglichen, eine Leseanfrage (240) zum Auslesen der identifizierten Datensätze zu erzeugen und/oder zu adressieren,
wobei der Prozessor (102) dazu konfiguriert ist, auf ein Ausführen der Programminstruktionen (106) den Server (100) zum Ausführen eines Verfahrens zu steuern, welches umfasst:
Empfangen einer Suchanfrage (220), wobei die Suchanfrage (220) einen oder mehrere der Indizes (111, 113, 115) identifiziert, auf welchen jeweils eine Suche ausgeführt werden soll, wobei die Suchanfrage (220) für jeden der identifizierten Indizes (111, 113, 115) jeweils ein oder mehrere Datenelemente als Suchbegriffe umfasst, wobei die Suchanfrage (220) für jeden der identifizierten Indizes (111, 113, 115) jeweils einen Berechtigungsnachweis (168) umfasst,
Prüfen der Berechtigungsnachweise (168) für die identifizierten Indizes (111, 113, 115),
Ausführen der Suchen auf den identifizierten Indizes (111, 113, 115), für welche jeweils ein gültiger Berechtigungsnachweis (168) vorliegt,
Senden der Suchergebnisse (222) in Antwort auf die Suchanfrage (220).

15. Verteiltes System (200) umfassend einen Server (100) nach Anspruch 14 und ein die Datenbank (125) verwaltendes Computersystem (120),
ferner umfassend beispielsweise einen weiteren Server (140), wobei der weitere Server (140) einen weiteren Prozessor (142), einen weiteren Speicher (144) mit weiteren ausführbaren Programminstruktionen (146) und eine weitere Kommunikationsschnittstelle (150) zur Kommunikation über ein Netzwerk (210) umfasst,
wobei in dem weiteren Speicher (144) beispielsweise ferner die Datensätze der Datenbank (125) in verschlüsselter Form gespeichert sind und von dem weiteren Server (140) zum Abrufen über das Netzwerk (210) bereitgestellt werden.

## Claims

1. A method for an encrypted search of a database (125), wherein a searchable, encrypted index structure (108) of the database (125) is provided on a first server (100),
wherein the index structure (108) comprises a first index (111) comprising a first list (110.1) of the data elements comprised by the data records of the database (125), wherein the data elements of the first index (111) are each encrypted using a first cryptographic key,
wherein the index structure (108) further comprises a second index (113), which comprises a second list (110.2) of the data elements comprised by the data records of the database (125), wherein the data elements of the second index (113) are each encrypted using a second cryptographic key, wherein the data elements in the second index (113) are each associated with first information items (112), from which a frequency of occurrence of the corresponding data elements in the database (125) results,
wherein the index structure (108) further comprises a third index (115) comprising a third list (110.3) of the data elements comprised by the data records of the database (125), wherein the data elements of the third index (115) are each encrypted using a third cryptographic key, wherein the data elements in the third index (115) are each associated with second information items (114) each identifying in an addressable manner the data records in which the data elements are stored in each case,
wherein each of the indices enables a search in the entire set of data elements comprised by the database and the indices each allow searches in the data elements with different focal points,
wherein access to each of the indices (111, 113, 115) requires proof of index-specific access authorisation,
wherein the first index (111) enables searches for whether one or more searched data elements are present in the database (125), wherein the search results (222) merely indicate whether the one or more searched data elements are present in the database (125),
wherein the second index (113) enables searches for statistical characteristics of the data elements present in the database (125), wherein the search results (222) indicate requested statistical characteristics of the one or more searched data elements,
wherein the third index (115) enables searches for identifiers of one or more of the data records of the database (125) comprising one or more searched data elements, wherein the search results comprise requested identifiers, wherein the identifiers enable the recipient of the search results (222) to generate and/or address a read request (240) for reading the identified data records,
wherein the method comprises:
receiving a search query (220) for executing a search in the index structure (108), wherein the search query (220) identifies one or more of the indices (111, 113, 115) on which a search is to be executed in each case, wherein the search query (220) comprises one or more data elements as search terms for each of the identified indices (111, 113, 115) in each case, wherein the search query (220) comprises a proof of authorisation (168) for each of the identified indices (111, 113, 115) in each case,
checking the proof of authorisation (168) for the identified indices (111, 113, 115),
executing the searches on the identified indices (111, 113, 115), for each of which a valid proof of authorisation (168) is available,
sending the search results (222) in response to the search query (220).

2. The method according to claim 1, wherein the first cryptographic key, the second cryptographic key and the third cryptographic key are each an index-specific public cryptographic key.

3. The method according to claim 1, wherein the first cryptographic key, the second cryptographic key and the third cryptographic key are each an index-specific symmetric key, or
wherein the first cryptographic key, the second cryptographic key and the third cryptographic key are each a combination of a shared public cryptographic key and an index-specific symmetric cryptographic key.

4. The method according to claim 1, wherein the second cryptographic key and the third cryptographic key are each an index-specific re-encryption key of an asymmetric proxy re-encryption method, which is generated using a secret cryptographic key of a computer system (120) managing the database (125) and an index-specific public cryptographic key, the associated private cryptographic key of which is available to one or more computer systems (160) authorised to access the corresponding index.

5. The method according to claim 4, wherein the data elements of the first, second and third indices (111, 113, 115) are each encrypted in the course of creating the respective indices (111, 113, 115) using a shared or index-specific public key of the computer system (120) managing the database (125), wherein the proxy re-encryption using the respective index-specific re-encryption key is applied in each case to the data elements encrypted using the shared or index-specific public key.

6. The method according to any one of claims 1 to 2, wherein, before being sent, the search results (222) are re-encrypted using an index-specific re-encryption key of a proxy re-encryption method, which key is generated using a secret cryptographic key of a computer system (120) managing the database (125) and an index-specific public cryptographic key, the associated private cryptographic key of which is available to one or more computer systems (160) authorised to access the corresponding index (111, 113, 115).

7. The method according to any one of the preceding claims, wherein the first information items (112) are also each encrypted using the second cryptographic key, and/or
wherein the second information items (114) are also each encrypted using the third cryptographic key, and/or
wherein the search query (220) identifies the first index (111) and defines a search for a presence of the one or more data elements in the database (125), wherein the search query (220) comprises a proof of authorisation (168) that demonstrates authorisation to access the first index (111), and/or
wherein the search query (220) identifies the second index (113) and defines a query for one or more statistical characteristics of one or more searched data elements in the database (125), wherein the search query (220) comprises a proof of authorisation (168) which demonstrates authorisation to access the second index (113), and/or
wherein the search query (220) identifies the third index (115) and defines a query for the identifiers of the data records comprising the one or more data elements being searched for, wherein the search query (220) comprises a proof of authorisation (168) which demonstrates authorisation to access the third index (115), and/or
wherein the first list (110.1) comprises the data elements in a first order, the second list (110.2) comprises the data elements in a second order, and the third list (110.3) comprises the data elements in a third order, wherein the second order is permuted relative to the first order, and wherein the third order is permuted relative to the first and second orders, and/or
wherein a number of data records comprising the respective data elements, and/or a number of data elements per data record comprising the respective data elements, further results from the first information items (112), and/or
wherein the first information items (112) further indicate whether data elements are included in the same data record.

8. The method according to any one of the preceding claims, wherein the second information items (114) further indicate in each case the storage locations of the identified data records.

9. The method according to claim 8, wherein the data records are made available for retrieval on a second server (140), wherein the data records are encrypted with a fourth cryptographic key, wherein the specified storage locations are storage locations of the corresponding data records on the second server (140), or
wherein the specified storage locations are storage locations of the corresponding data records for access via the computer system (120) managing the database (125).

10. The method according to any one of the preceding claims, wherein the data elements of the search query (220) used as search terms are each encrypted using the cryptographic key of the corresponding index (111, 113, 115), or
wherein the data elements of the received search query (220) used as search terms are each encrypted using the cryptographic key of the corresponding index (111, 113, 115) to perform the search.

11. The method according to any one of the preceding claims, wherein the data elements each comprise individual words in basic grammatical form and/or numerical data and/or
wherein the database (125) is converted to the fifth or sixth normal form in the course of creating the index structure (108), wherein the index structure (108) is created using the fifth or sixth normal form.

12. The method according to any one of the preceding claims, wherein a computer system (120) managing the database (125) creates the index structure (108) and executes the encryptions using the first, second and third cryptographic keys, wherein the computer system (120) managing the database (125) sends the index structure (108) to the first server (100), or
wherein the computer system (120) managing the database (125) encrypts the individual data elements in the data records of the database (125) and sends them to the first server (100) to create the index structure (108),
wherein the encryption by the computer system (120) managing the database (125) is, for example, an encryption with a cross-index cryptographic key and an index-specific encryption is performed, for example, by the first server (100) in the course of creating the index structure (108).

13. The method according to any one of the preceding claims, wherein the proof of authorisation has the form of a hierarchical chain structure which comprises, for each user of the index structure (108) who has authorisation to access one of the indices (111, 113, 115), a grant chain in which, starting from the creator of the data record and/or the index structure (108) up to the user with the corresponding access authorisation, a sequence of users of the index structure (108) is entered, wherein within the sequence the preceding user has in each case granted the corresponding access authorisation to the subsequent user.

14. A server (100) for an encrypted search in a database (125), wherein the server (100) comprises a processor (102), a memory (104) with executable program instructions (106) and a communication interface (116) for communication via a network (210),
wherein a searchable, encrypted index structure (108) of the database (125) is further stored in the memory (104),
wherein the index structure (108) comprises a first index (111) comprising a first list (110.1) of the data elements comprised by the data records of the database (125), wherein the data elements of the first index (111) are each encrypted using a first cryptographic key,
wherein the index structure (108) further comprises a second index (113), which comprises a second list (110.2) of the data elements comprised by the data records of the database (125), wherein the data elements of the second index (113) are each encrypted using a second cryptographic key, wherein the data elements in the second index (113) are each associated with first information items (112), from which a frequency of occurrence of the corresponding data elements in the database results,
wherein the index structure (108) further comprises a third index (115) comprising a third list (110.3) of the data elements comprised by the data records of the database (125), wherein the data elements of the third index (115) are each encrypted using a third cryptographic key, wherein the data elements in the third index (115) are each associated with second information items (114), each identifying in an addressable manner the data records in which the data elements are stored in each case,
wherein each of the indices enables a search in the entire set of data elements comprised by the database and the indices each allow searches in the data elements with different focal points,
wherein access to each of the indices (111, 113, 115) requires proof of index-specific access authorisation,
wherein the first index (111) enables searches for when one or more searched data elements are present in the database (125), wherein the search results (222) merely indicate when the one or more searched data elements are present in the database (125),
wherein the second index (113) enables searches for statistical characteristics of the data elements present in the database (125), wherein the search results (222) indicate requested statistical characteristics of the one or more searched data elements,
wherein the third index (115) enables searches for identifiers of one or more of the data records of the database (125) comprising one or more searched data elements, wherein the search results comprise requested identifiers, wherein the identifiers enable the recipient of the search results (222) to generate and/or address a read request (240) for reading the identified data records,
wherein the processor (102) is configured to, upon execution of the program instructions (106), control the server (100) to execute a method comprising:
receiving a search query (220), wherein the search query (220) identifies one or more of the indices (111, 113, 115) on which a search is to be carried out in each case, wherein the search query (220) comprises one or more data elements as search terms for each of the identified indices (111, 113, 115) in each case, wherein the search query (220) comprises a proof of authorisation (168) for each of the identified indices (111, 113, 115) in each case,
checking the proof of authorisation (168) for the identified indices (111, 113, 115),
executing the searches on the identified indices (111, 113, 115), for each of which a valid proof of authorisation (168) is available,
sending the search results (222) in response to the search query (220).

15. A distributed system (200) comprising a server (100) according to claim 14 and a computer system (120) managing the database (125),
further comprising, for example, a further server (140), wherein the further server (140) comprises a further processor (142), a further memory (144) with further executable program instructions (146) and a further communication interface (150) for communication via a network (210),
wherein, for example, the data records of the database (125) are also stored in encrypted form in the further memory (144) and are provided by the further server (140) for retrieval via the network (210).

## Revendications

1. Procédé de recherche chiffrée dans une banque de données (125), dans lequel une structure d'index (108) chiffrée consultable de la banque de données (125) est disponible sur un premier serveur (100),
dans lequel la structure d'index (108) comprend un premier index (111), lequel comprend une première liste (110.1) des éléments de données compris par les ensembles de données de la banque de données (125), où les éléments de données du premier index (111) sont chiffrés respectivement moyennant l'emploi d'une première clé cryptographique,
dans lequel la structure d'index (108) comprend en outre un deuxième index (113), lequel comprend une deuxième liste (110.2) des éléments de données compris par les ensembles de données de la banque de données (125), où les éléments de données du deuxième index (113) sont chiffrés respectivement moyennant l'emploi d'une deuxième clé cryptographique, où les éléments de données dans le deuxième index (113) sont respectivement associés à des premières informations (112) à partir desquelles on peut déduire une fréquence d'occurrence des éléments de données correspondants dans la banque de données (125),
dans lequel la structure d'index (108) comprend en outre un troisième index (115), lequel comprend une troisième liste (110.3) des éléments de données compris par les ensembles de données de la banque de données (125), où les éléments de données du troisième index (115) sont chiffrés respectivement moyennant l'emploi d'une troisième clé cryptographique, où respectivement des deuxièmes informations (114) sont associées aux éléments de données dans le troisième index (115), lesquelles identifient respectivement de manière adressable les ensembles de données dans lesquels les éléments de données sont respectivement enregistrés,
dans lequel chacun des index permet respectivement une recherche dans la quantité totale des éléments de données compris par la banque de données et les index permettent respectivement des recherches dans les éléments de données avec des points forts divers,
dans lequel un accès à chacun des index (111, 113, 115) présuppose respectivement un justificatif d'un droit d'accès individuel à l'index,
dans lequel le premier index (111) permet des recherches si un ou plusieurs éléments de données recherchés sont présents dans la banque de données (125), où les résultats de recherche (222) indiquent simplement si un ou plusieurs éléments de données recherchés sont présents dans la banque de données (125),
dans lequel le deuxième index (113) permet des recherches de caractéristiques statistiques des éléments de données présents dans la banque de données (125), où les résultats de recherche (222) indiquent les caractéristiques statistiques demandées de l'élément ou des éléments de données recherchés,
dans lequel le troisième index (115) permet des recherches d'identificateurs d'un ensemble ou des ensembles de données de la banque de données (125), lesquels comprennent un ou plusieurs éléments de données recherchés, où les résultats de recherche comprennent des identificateurs demandés, où les identificateurs permettent au récepteur des résultats de recherche (222) de créer et/ou d'adresser une demande de lecture (240) pour la lecture des ensembles de données identifiés,
le procédé comprenant :
la réception d'une demande de recherche (220) pour l'exécution d'une recherche dans la structure d'index (108), où la demande de recherche (220) identifie un ou plusieurs parmi les index (111, 113, 115) sur lesquels une recherche doit être respectivement effectuée, où la demande de recherche (220) comprend, pour chacun des index (111, 113, 115) identifiés, respectivement un ou plusieurs éléments de données en tant que mots-clés à rechercher, où la demande de recherche (220) comprend, pour chacun des index (111, 113, 115) identifiés, respectivement un justificatif d'autorisation (168),
la vérification des justificatifs d'autorisation (168) pour les index (111, 113, 115) identifiés,
l'exécution des recherches sur les index (111, 113, 115) identifiés pour lesquels un justificatif d'autorisation (168) valide est respectivement présent,
l'envoi des résultats de recherche (222) en réponse à la demande de recherche (220).

2. Procédé selon la revendication 1, dans lequel, dans le cas de la première clé cryptographique, de la deuxième clé cryptographique et de la troisième clé cryptographique, il s'agit respectivement d'une clé cryptographique publique propre à l'index.

3. Procédé selon la revendication 1, dans lequel, dans le cas de la première clé cryptographique, de la deuxième clé cryptographique et de la troisième clé cryptographique, il s'agit respectivement d'une clé symétrique propre à l'index ou
dans lequel, dans le cas de la première clé cryptographique, de la deuxième clé cryptographique et de la troisième clé cryptographique, il s'agit respectivement d'une combinaison à base d'une clé cryptographique publique commune et d'une clé cryptographique symétrique propre à l'index.

4. Procédé selon la revendication 1, dans lequel, dans le cas de la deuxième clé cryptographique et de la troisième clé cryptographique, il s'agit respectivement d'une clé de rechiffrement, Re-Encryption, propre à l'index d'un procédé de Proxy Re-Encryption asymétrique, laquelle est créée moyennant l'emploi d'une clé cryptographique privée d'un système informatique (120) gérant la banque de données (125) et d'une clé cryptographique publique propre à l'index dont la clé cryptographique privée correspondante est à disposition d'un ou de plusieurs systèmes informatiques (160) habilités à un accès à l'index correspondant.

5. Procédé selon la revendication 4, dans lequel les éléments de données du premier, du deuxième et du troisième index (111, 113, 115) sont chiffrés dans le cadre de l'établissement de l'index (111, 113, 115) correspondant respectivement moyennant l'emploi d'une clé publique commune ou propre à l'index du système informatique (120) gérant la banque de donnés (125), où le Proxy Re-Encryption est appliqué, moyennant l'emploi de la clé de Re-Encryption propre à l'index respectif, respectivement aux éléments de données chiffrés moyennant l'emploi de la clé publique commune ou propre à l'index.

6. Procédé selon l'une des revendications 1 à 2, dans lequel les résultats de recherche (222) sont rechiffrés avant l'envoi moyennant l'emploi d'une clé de Re-Encryption propre à l'index d'un procédé de Proxy Re-Encryption, laquelle est créée moyennant l'emploi d'une clé cryptographique privée d'un système informatique (120) gérant la banque de données (125) et d'une clé cryptographique publique propre à l'index dont la clé cryptographique privée correspondante est à disposition d'un ou de plusieurs systèmes informatiques (160) habilités à un accès à l'index correspondant (111, 113, 115).

7. Procédé selon l'une des revendications précédentes, dans lequel les premières informations (112) sont également chiffrées respectivement moyennant l'emploi de la deuxième clé cryptographique, et/ou
dans lequel les deuxièmes informations (114) sont également chiffrées respectivement moyennant l'emploi de la troisième clé cryptographique, et/ou
dans lequel la demande de recherche (220) identifie le premier index (111) et définit une recherche pour une présence d'un ou de plusieurs éléments de données dans la banque de données (125), où la demande de recherche (220) comprend un justificatif d'autorisation (168), lequel justifie une autorisation d'accès au premier index (111), et/ou
dans lequel la demande de recherche (220) identifie le deuxième index (113) et définit une demande pour une ou plusieurs caractéristiques statistiques d'un ou de plusieurs éléments de données recherchés dans la banque de données (125), où la demande de recherche (220) comprend un justificatif d'autorisation (168), lequel justifie une autorisation d'accès au deuxième index (113), et/ou
dans lequel la demande de recherche (220) identifie le troisième index (115) et définit une recherche pour les identificateurs des ensembles de données, lesquels comprennent l'élément ou les éléments de données recherchés, où la demande de recherche (220) comprend un justificatif d'autorisation (168), lequel justifie une autorisation d'accès au troisième index (115), et/ou
dans lequel la première liste (110.1) comprend les éléments de données dans une première séquence, la deuxième liste (110.2) comprend les éléments de données dans une deuxième séquence et la troisième liste (110.3) comprend les éléments de données dans une troisième séquence, où la deuxième séquence est permutée par rapport à la première séquence et où la troisième séquence est permutée par rapport à la première et à la deuxième séquence, et/ou
dans lequel, en outre, à partir des premières informations (112), on déduit un nombre d'ensembles de données, lesquels comprennent les éléments de données respectifs, et/ou un nombre d'éléments de données par ensemble de données, lequel comprend les éléments de données respectifs, et/ou
dans lequel, à partir des premières informations (112), on déduit en outre si des éléments de données sont compris par le même ensemble de données.

8. Procédé selon l'une des revendications précédentes, dans lequel les deuxièmes informations (114) indiquent en outre respectivement les emplacements de mémoire des ensembles de données identifiés.

9. Procédé selon la revendication 8, dans lequel les ensembles de données sont fournis sur un deuxième serveur (140) pour la récupération, où les ensembles de données sont chiffrés avec une quatrième clé cryptographique, où, dans le cas des emplacements de mémoire, il s'agit d'emplacements de mémoire des ensembles de données correspondants sur le deuxième serveur (140), ou
dans lequel, dans le cas des emplacements de mémoire indiqués, il s'agit d'emplacements de mémoire des ensembles de données correspondants pour un accès par le biais du système informatique (120) gérant la banque de données (125).

10. Procédé selon l'une des revendications précédentes, dans lequel les éléments de données employés en tant que mots-clés de recherche de la demande de recherche (220) sont chiffrés respectivement moyennant l'emploi de la clé cryptographique de l'index (111, 113, 115) correspondant, ou
dans lequel les éléments de données employés en tant que mots-clés de recherche de la demande de recherche (220) reçue sont chiffrés pour l'exécution de la recherche respectivement moyennant l'emploi de la clé cryptographique de l'index (111, 113, 115) correspondant.

11. Procédé selon l'une des revendications précédentes, dans lequel les éléments de données comprennent respectivement des mots individuels sous une forme de base grammaticale et/ou des données numériques, et/ou
dans lequel la banque de données (125) est mise dans la cinquième ou la sixième forme normalisée dans le cadre de la création de la structure d'index (108), où la structure d'index (108) est établie moyennant l'emploi de la cinquième ou de la sixième forme normalisée.

12. Procédé selon l'une des revendications précédentes, dans lequel un système informatique (120) gérant la banque de données (125) établit la structure d'index (108) et exécute les chiffrements moyennant l'emploi de la première, de la deuxième et de la troisième clé cryptographique, où le système informatique (120) gérant la banque de données (125) envoie la structure d'index (108) au premier serveur (100), ou
dans lequel le système informatique (120) gérant la banque de données (125) chiffre les éléments de données individuels dans les ensembles de données de la banque de données (125) et les envoie au premier serveur (100) pour l'établissement de la structure d'index (108),
dans lequel, dans le cas du chiffrement par le système informatique (120) gérant la banque de données (125), il s'agit, par exemple, d'un chiffrement avec une clé cryptographique inter-index et un chiffrement individuel d'index a lieu par exemple par le premier serveur (100) dans le cadre de l'établissement de la structure d'index (108).

13. Procédé selon l'une des revendications précédentes, dans lequel le justificatif d'autorisation présente la forme d'une structure en chaine hiérarchique, laquelle, pour chaque utilisateur de la structure d'index (108) qui possède une autorisation d'accès à un des index (111, 113, 115), comprend une chaine d'octroi dans laquelle, en partant du créateur de l'ensemble de données et/ou de la structure d'index (108) jusqu'à l'utilisateur avec l'autorisation d'accès correspondante, un ordre de passage d'utilisateurs de la structure d'index (108) est inscrit, où, dans l'ordre de passage, respectivement l'utilisateur précédent a accordé à l'utilisateur suivant le justificatif d'accès correspondant.

14. Serveur (100) destiné à une recherche chiffrée dans une banque de données (125), le serveur (100) comprenant un processeur (102), une mémoire (104) avec des instructions de programme (106) exécutables et une interface de communication (116) pour la communication par le biais d'un réseau (210),
dans lequel, en outre, une structure d'index (108) chiffrée et consultable de la banque de données (125) est enregistrée dans la mémoire (104),
dans lequel la structure d'index (108) comprend un premier index (111) lequel comprend une première liste (110.1) des éléments de données compris par les ensembles de données de la banque de données (125), où les éléments de données du premier index (111) sont chiffrés respectivement moyennant l'emploi d'une première clé cryptographique,
dans lequel la structure d'index (108) comprend en outre un deuxième index (113), lequel comprend une deuxième liste (110.2) des éléments de données compris par les ensembles de données de la banque de données (125), où les éléments de données du deuxième index (113) sont chiffrés respectivement moyennant l'emploi d'une deuxième clé cryptographique, où les éléments de données dans le deuxième index (113) sont respectivement associés à des premières informations (112) à partir desquelles on peut déduire une fréquence d'occurrence des éléments de données correspondants dans la banque de données,
dans lequel la structure d'index (108) comprend en outre un troisième index (115), lequel comprend une troisième liste (110.3) des éléments de données compris par les ensembles de données de la banque de données (125), où les éléments de données du troisième index (115) sont chiffrés respectivement moyennant l'emploi d'une troisième clé cryptographique, où respectivement des deuxièmes informations (114) sont associées aux éléments de données dans le troisième index (115), lesquelles identifient respectivement de manière adressable les ensembles de données dans lesquels les éléments de données sont respectivement enregistrés,
dans lequel chacun des index permet respectivement une recherche dans la quantité totale des éléments de données compris par la banque de données et les index permettent respectivement des recherches dans les éléments de données avec des points forts divers,
dans lequel un accès à chacun des index (111, 113, 115) présuppose respectivement un justificatif d'un droit d'accès individuel à l'index,
dans lequel le premier index (111) permet des recherches si un ou plusieurs éléments de données recherchés sont présents dans la banque de données (125), où les résultats de recherche (222) indiquent simplement si un ou plusieurs éléments de données recherchés sont présents dans la banque de données (125),
dans lequel le deuxième index (113) permet des recherches de caractéristiques statistiques des éléments de données présents dans la banque de données (125), où les résultats de recherche (222) indiquent les caractéristiques statistiques demandées de l'élément ou des éléments de données recherché,
dans lequel le troisième index (115) permet des recherches d'identificateurs de l'ensemble ou des ensembles de données de la banque de données (125), lesquels comprennent un ou plusieurs éléments de données recherchés, où les résultats de recherche comprennent des identificateurs demandés, où les identificateurs permettent au récepteur des résultats de recherche (222) de créer et/ou d'adresser une demande de lecture (240) pour la lecture des ensembles de données identifiés,
dans lequel le processeur (102) est conçu, suite à une exécution des instructions de programme (106), pour commander le serveur (100) pour l'exécution d'un procédé, lequel comprend :
la réception d'une demande de recherche (220), où la demande de recherche (220) identifie un ou plusieurs parmi les index (111, 113, 115) sur lesquels une recherche doit être respectivement effectuée, où la demande de recherche (220) comprend, pour chacun des index (111, 113, 115) identifiés, respectivement un ou plusieurs éléments de données en tant que mots-clés à rechercher, où la demande de recherche (220) comprend, pour chacun des index (111, 113, 115) identifiés, respectivement un justificatif d'autorisation (168),
la vérification des justificatifs d'autorisation (168) pour les index (111, 113, 115) identifiés,
l'exécution des recherches sur les index (111, 113, 115) identifiés pour lesquels un justificatif d'autorisation (168) valide est respectivement présent,
l'envoi des résultats de recherche (222) en réponse à la demande de recherche (220).

15. Système partagé (200) comprenant un serveur (100) selon la revendication 14 et un système informatique (120) gérant la banque de données (125),
comprenant, en outre, par exemple, un serveur supplémentaire (140), où le serveur supplémentaire (140) comprend un processeur supplémentaire (142), une mémoire supplémentaire (144) avec des instructions de programme exécutables supplémentaires (146) et une interface de communication supplémentaire (150) pour la communication par le biais d'un réseau (210),
dans lequel, en outre, par exemple, les ensembles de données de la banque de données (125) sont enregistrées sous forme chiffrée dans la mémoire supplémentaire (144) et sont mises à disposition par le serveur supplémentaire (140) pour la récupération par le biais du réseau (210).
